(19) **Europäisches Patentamt**
**European Patent Office**
**Office européen des brevets**

(11) **EP 2 594 657 B1**

(12) **EUROPEAN PATENT SPECIFICATION**

(45) Date of publication and mention
of the grant of the patent:
**30.11.2016 Bulletin 2016/48**

(21) Application number: **11842484.5**

(22) Date of filing: **27.10.2011**

(51) Int Cl.:
*C22C 38/04* (2006.01)      *C22C 38/14* (2006.01)
*C22C 38/00* (2006.01)      *B23K 15/00* (2006.01)
*B23K 35/30* (2006.01)      *C21D 8/02* (2006.01)
*C22C 19/03* (2006.01)      *C22C 38/06* (2006.01)
*C22C 38/02* (2006.01)      *C22C 38/12* (2006.01)
*C22C 38/16* (2006.01)      *C22C 38/08* (2006.01)

(86) International application number:
**PCT/JP2011/074818**

(87) International publication number:
**WO 2012/070359 (31.05.2012 Gazette 2012/22)**

(54) **ELECTRON BEAM WELDED JOINT, STEEL MATERIAL FOR USE IN ELECTRON BEAM WELDED JOINT, AND MANUFACTURING METHOD THEREOF**

ELEKTRONENSTRAHL-SCHWEISSVERBINDUNG, STAHLMATERIAL ZUR VERWENDUNG IN ELEKTRONENSTRAHL-SCHWEISSVERBINDUNG UND HERSTELLUNGSVERFAHREN DAFÜR.

JOINT SOUDÉ PAR FAISCEAU D'ÉLECTRONS, MATÉRIAU EN ACIER DESTINÉ À ÊTRE UTILISÉ DANS LE JOINT SOUDÉ PAR FAISCEAU D'ÉLECTRONS ET LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2010 JP 2010260582**

(43) Date of publication of application:
**22.05.2013 Bulletin 2013/21**

(73) Proprietor: **Nippon Steel & Sumitomo Metal Corporation**
**Tokyo 100-8071 (JP)**

(72) Inventors:
• **UEMORI Ryuji**
**Tokyo 100-8071 (JP)**
• **HONMA Ryuichi**
**Tokyo 100-8071 (JP)**
• **ISHIKAWA Tadashi**
**Tokyo 100-8071 (JP)**

• **KOJIMA Akihiko**
**Tokyo 100-8071 (JP)**
• **HOSHINO Manabu**
**Tokyo 100-8071 (JP)**

(74) Representative: **Vossius & Partner Patentanwälte Rechtsanwälte mbB**
**Siebertstrasse 3**
**81675 München (DE)**

(56) References cited:
| | |
|---|---|
| EP-A1- 1 221 493 | JP-A- 3 047 918 |
| JP-A- 8 060 293 | JP-A- 9 041 083 |
| JP-A- H05 171 341 | JP-A- 2000 001 738 |
| JP-A- 2001 089 825 | JP-A- 2003 293 079 |
| JP-A- 2004 011 008 | JP-A- 2004 124 168 |
| JP-A- 2004 162 150 | JP-A- 2004 216 384 |
| JP-A- 2005 307 261 | JP-A- 2007 021 532 |
| JP-A- 2007 046 096 | JP-A- 2008 088 504 |
| JP-A- 2008 214 754 | JP-A- 2009 127 104 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a steel material for electron-beam welding, which is to be welded by emitting an electron beam to a weld target portion having a plate-like or foil-like insert metal inserted between groove faces, and a method of manufacturing the steel material for electron-beam welding, and further relates to an electron-beam welded joint formed by emitting an electron beam to a weld target portion of the steel material having an insert metal inserted between groove surfaces.

Background Art

In recent years, problems have arisen of reducing $CO_2$ gas, which is said to be a cause of global warming, or the future exhaustion of oil or other fossil fuels. To address these problems, recyclable natural energy has been actively used. Wind power is one form of promising recyclable natural energies, and large-scale wind power generators have been increasingly constructed.

The most suitable area for wind power generators to be constructed is an area where strong wind is expected to blow constantly, and off-shore wind power generators are under planning or actually in operation all over the world (see Patent Documents 1 to 4).

In order to build a tower for wind power generation at sea, it is necessary to drive the foundation portion of the tower into the seabed. Further, in order to obtain sufficient height of turbine blades of the wind power generator from the sea level, the foundation portion of the tower is required to have sufficient length.

Thus, the foundation portion of the tower of the wind power generator employs a steel pipe structure having a wall thickness exceeding 50 mm, for example, of approximately 100 mm, and a large diameter in cross-section of approximately 4 m. Further, the total height of the tower is as high as 80 m or more. In recent years, a large steel-structure such as a tower for wind power generation has been required to be welded and built through electron beam welding on the coast near the construction site in an easy and efficient manner.

In other words, under the circumstances described above, there arises a new technical demand for welding an ultra-thick steel plate having a thickness of 100 mm on-site in a highly efficient manner.

In general, a high-energy-density beam welding such as electron beam welding and laser beam welding exhibits high efficiency. However, the thickness of the steel plate to be welded with laser beam has been limited. Further, the conventional electron beam welding is required to be performed in a vacuum chamber under a high vacuum state. Thus, the thickness or size of the steel plate that can be welded through the high-energy-density beam welding largely depends on the capacity of welding equipment or inner size of the vacuum chamber.

In recent years, to address the circumstances described above, an electron-beam welding method has been proposed that employs reduced pressure in the vicinity of a portion to be welded, thereby efficiently welding an ultra-thick steel plate with a thickness of approximately 100 mm on-site. For example, the Welding Institute of the United Kingdom has developed a welding method (reduced pressured electron beam welding: RPEBW) enabling working under a low vacuum state (see Patent Document 5).

With the reduced pressured electron beam welding (RPEBW), it is possible to efficiently perform welding, by locally reducing the pressure of the portion to be welded to be a vacuum state in the case where a large-scale structure such as the tower of a wind power generator is constructed. The RPEBW method is performed in a state in which the degree of vacuum is low as compared with the method of performing welding in the vacuum chamber. However, the ductility of a welded metal (WM) can be expected to be improved as compared with the conventional arc welding.

In general, a fracture toughness value $\delta c$ based on fracture mechanics is known as an index for quantitatively evaluating the safety of a welded structure. The $\delta c$ can be obtained through a crack tip opening displacement (CTOD) test. The fracture toughness is affected by a size of a test piece. Thus, although favorable results can be obtained through a small-sized test such as the conventional V-notch Charpy impact test, it is not always true that the favorable fracture toughness value $\delta c$, which is 0.5 mm or more at 0°C, can be obtained through the CTOD test with a welded joint in the large-scale steel sheet.

The electron-beam welding method is a method employing energy of the electron beam to once melt and solidify the base material of a weld target portion to weld. Normally, the components of the weld target portion in the electron-beam welding method are almost the same as those of the base metal (steel material). On the other hand, in large-heat input arc welding such as electro gas welding, mechanical properties such as hardness of the welded metal and the fracture toughness value $\delta c$ are adjusted by using, for example, welding wire. The welding wire is not used in the normal electron-beam welding method.

In view of the above-described circumstances, a method of optimizing the hardness or cleanliness of the welded metal (WM) has been proposed to improve the fracture toughness value $\delta c$ of the electron-beam welded joint (see, for example, Patent Documents 6 and 7). Patent Document 6 proposes setting the hardness of the welded metal to be more than 110% and not more than 220% of that of the steel material (base metal), and the width of the welded metal to be 20% or less of the thickness of the steel material (base metal). Further, Patent Document 7 proposes setting the amount of O in the welded metal to 20 ppm or more, and the number of oxide grains having a diameter of 2.0 $\mu$m or more to 10 pieces/mm² or less.

Related Art Documents

Patent Document

Patent Document 1: Japanese Unexamined Patent Application, First Publication No. 2008-111406
Patent Document 2: Japanese Unexamined Patent Application, First Publication No. 2007-092406
Patent Document 3: Japanese Unexamined Patent Application, First Publication No. 2006-322400
Patent Document 4: Japanese Unexamined Patent Application, First Publication No. 2006-037397
Patent Document 5: PCT International Publication No. WO 99/16101
Patent Document 6: Japanese Unexamined Patent Application, First Publication No. 2007-21532
Patent Document 7: Japanese Unexamined Patent Application, First Publication No. 2008-88504

JP2003-293079 A discloses a steel which has excellent HIC (hydrogen induced cracking) resistance and strength of 5L-X65 or higher in the API standards, and in which limit CTOD (crack tip opening displacement) at -10°C is ≥0.20 mm in both of WM (weld metal) and FL (fusion lines) in a weld zone with electron beam welding or laser welding applied.
JP2009-127104 A discloses a steel having excellent weld heat-affected zone toughness.
JP2005-307261 A discloses a thick high strength steel plate having a Ceq of 0.35 to 0.40, and, e.g., having a plate thickness of 50 to 80 mm and a tensile strength in a class of 490 to 620 MPa, and having excellent HAZ (heat affected zone) thoughness in high heat input welding at 20 to 100 kJ/mm.
JP2008-214754 discloses a method for producing a thick high strength steel plate having good brittle fracture spreading resistant characteristic and toughness at high heat input welding thermal affected part, and the thick high strength steel plate obtained with this method.
JP05171341 A discloses a high tensile strength steel plate excellent toughness at low temperature in a welding heat-affected zone by adding Ti, Mg, and Ca to a molten steel containing specific amounts of dissolved oxygen under specific conditions, subjecting a cast slab having the resulting specific composition to reheating at specific temp., and preparing a thick steel plate.
JP2007-046096 A discloses a continuously cast slab which simultaneously satisfies a sheet thickness of 50 to 80 mm, a yield strength in a class of 390 to 460 MPa, toughness in the central part of the sheet thickness, high heat input weld HAZ (Heat Affected Zone) toughness and high rolling efficiency.
JP2004-124168 A discloses a steel pipe which satisfies X 60 to 80 in an API (American Petroleum Institute) standard, and has excellent weld zone toughness and deformability.
JP2004-216384 A discloses a backing for large heat input electro-slag welding, capable of obtaining weld metal having excellent toughness of at least 70 J in Chapry absorbed energy at 0°C when a high tensile steel material having tensile strength in a class of 400-600 MPa is electro-slag welded with the welding heat input of about 550-1,500 kJ/cm.
EP 1 221 493 A discloses a steel plate having a yield strength not lower than 460 MPa and CTOD in a HAZ not less than 0.2 mm at -10°C.
JP2000-1738 A discloses a high tensile strength steel plate having good HAZ toughness even in welding in the large amount of welding heat input by allowing it to have a specified chemical componential composition and also specifying the content of TiN.
JP2001-89825 A discloses a steel product having superior HAZ toughness even at large heat input welding of >20 kJ/min amount of heat input.

Disclosure of the Invention

Problems to be Solved by the Invention

When the tower of a wind power generator at sea is constructed, steel materials are butted to each other to weld, and the welded steel materials are used without applying any thermal treatment to the welded portion. Thus, a welded metal (WM) and a weld heat-affected zone (HAZ: heat-affected zone, hereinafter, simply referred to as "heat-affected zone") are required to have excellent toughness. In the case of the electron-beam welding, since the welding wire is not used, the toughness of the welded metal and the heat-affected zone is controlled by adjusting the components of the base metal.

Conventionally, a method is proposed of controlling a relationship between inclusions in the welded metal, the hardness of the welded metal, and the hardness of the base metal, or the width of the welded metal. However, in the case where the toughness of the heat-affected zone is not sufficient, the fracture toughness of the welded portion as a whole reduces.

It should be noted that, by attaching a plate-like or foil-like Ni (insert metal) to a surface to be welded (groove face), and applying electron-beam welding, it is possible to enhance the toughness of the welded metal (WM) so as to be higher than that of the base metal. However, in this case, the difference in hardness between the welded metal and the heat-affected zone significantly increases if the components of the base metal are not appropriate This leads to a significant reduction in the fracture toughness value $\delta c$ of the heat-affected zone where the difference in hardness is significantly large.

According to the study made by the present inventors, even if the insert metal is not used, the appropriate components for improving the ductility are not always the same between the welded metal and the heat-affected zone in the electron-beam welded joint. Thus, the high ductility cannot be obtained at the welded metal even if the electron-beam welding is applied to the conventional high-HAZ-toughness steel for arc welding. Further, the high ductility cannot be obtained at the heat-affected zone even if the components of the steel material for arc welding are optimized by taking the ductility of the welded metal formed by the electron-beam welding into consideration.

In other words, the electron-beam welding and the arc welding are fundamentally different in the welding method and the formed joint structure. Thus, the problem of the electron-beam welding cannot be solved by using the manner for solving the problem of the arc welding.

The present invention has been made in view of the circumstances described above, and an object of the present invention is to provide a steel material for electron-beam welding having a thickness of 45 mm or more and constituting a foundation portion of a tower of a wind power generator at sea, which can be used for forming a welded joint exhibiting increased strength and appropriate balance of the fracture toughness values between the welded metal (WM), the heat-affected zone (HAZ) and the base metal (BM), by emitting an electron beam to a weld target portion having a plate-like or foil-like insert metal inserted between groove faces.

Another object of the present invention is to provide an electron-beam welded joint formed by emitting an electron beam to a weld target portion of the steel material having a plate-like or foil-like insert metal inserted between groove faces.

Means for Solving the Problems

The present invention provides a steel material for electron-beam welding to be welded by emitting an electron beam to a weld target portion having a plate-like or foil-like insert metal inserted between groove faces, in which Mn of 1.8% by mass or more is added to secure hardenability. Further, Mg and/or Ca, which are strong deoxidation elements, are added to the steel material together to generate fine oxide containing Mg, which is used as a pinning grain for suppressing grain growth or nucleus for intra-granular transformation. This makes fracture toughness values of steel material (BM), heat-affected zone (HAZ), and welded metal (WM) appropriately balanced.

In particular, with the electron-beam welding, in which the welding wire is not used, the WM width and the HAZ width are narrow, and the amount of heat inputted is low, by dispersing fine oxides containing Mg in the welded metal (WM) and the heat-affected zone (HAZ), coarsening of the austenite grain in the heat-affected zone (HAZ) can be suppressed. Further, the dispersion of fine oxides containing Mg in the welded metal (WM) and the heat-affected zone (HAZ) greatly contributes to generation of intra-granular ferrite and to improving the fracture toughness at the welded portion.

Further, according to the present invention, by controlling newly introduced index formulae CcEBB and CeEBW of hardenability after electron-beam welding, the fracture toughnesses of the steel material (BM), the welded metal (WM), and the heat-affected zone (HAZ) are appropriately balanced to secure a desired fracture toughness of the electron-beam welded joint as a whole formed by using an insert metal. Yet further, according to the present invention, in order to enhance the hardenability, the amount of Mn is increased and the amounts of Cr, Mo, Cu, Ni, and/or Nb are decreased to reduce the manufacturing cost of the steel material for electron-beam welding.

The indices CeEBB and CeEBW of hardenability after electron-beam welding are indices newly introduced by the present inventors to improve the fracture toughness of the electron-beam welded joint formed by using the insert metal. The technical meaning of the indices CeEBB and CeEBW will be described later along with the technical meaning of an index (ratio) "C/CeEBB" (C: the amount of C), which is also introduced.

The following are the main points of the present invention.

(1) An electron-beam welded joint according to an aspect of the present invention provides an electron-beam welded joint having a welded metal manufactured by applying an electron-beam welding to a steel material, the steel material having a composition consisting of, by mass %: C: 0.02% to 0.10%; Si: 0.03% to 0.30%; Mn: 1.8% to 2.5%; Ti: 0.005% to 0.015%; N: 0.0020% to 0.0060%; O: 0.0010% to 0.0035%; Mg: 0.0003% to 0.0027%; Ca: 0.0003% to 0.0027%; Nb: 0% to 0.020%; V: 0% to 0.030%; Cr: 0% to 0.50%; Mo: 0% to 0.50%; Cu: 0% to 0.25%; Ni: 0% to 0.50%; B: 0% to 0.0030%; Al: limited to 0.015% or less; P: limited to 0.015% or less; and S: limited to 0.010% or less, with a balance consisting of iron and inevitable impurities, wherein an amount of Mg and Ca contained in the composition of the steel material satisfies $0.0006\% \leq Mg + Ca \leq 0.0040\%$ in mass %, a total amount of Cr, Mo, Cu, and Ni in the composition of the steel is 0.70 or less, and an index value CeEBB obtained by substituting the composition of the steel material into the following Formula 1 is 0.42% or more and 0.65% or less, a C/CeEBB, which is a ratio of the amount of C in the steel material by mass % relative to the index value CeEBB, falls in the range of 0.02 to 0.15, the number of oxides having an equivalent circle diameter of 1.0 $\mu$m or more is 20 pieces/mm$^2$ or less at a thickness center portion in cross-section along a thickness direction of the steel material, the number of oxides containing Mg of 7% or more and having an equivalent circle diameter of 0.05 $\mu$m or more and less than 0.5 $\mu$m is $1 \times 10^3$ to $1 \times 10^5$ pieces/mm$^2$ at the thickness center portion, the number of oxides containing Mg of 7% or more and having an equivalent circle diameter of 0.05 $\mu$m or more and less than 0.5 $\mu$m being measured by FE-TEM at a magnification 10000 to 1000000-fold, the welded metal has a composition consisting of, by mass %: C: 0.02% to 0.10%; Si: 0.03% to 0.30%; Mn: 1.2% to 2.4%; Ni: 1.0% to 2.3%; Ti: 0.005% to 0.015%; N: 0.0020% to 0.0060%; O: 0.0004% to 0.0020%; Mg: 0.0003% to 0.0027%; Ca: 0.0003% to 0.0027%; Nb: 0% to 0.020%; V: 0% to 0.030%; Cr: 0% to 0.50%; Mo: 0% to 0.50%; Cu: 0% to 0.25%; B: 0% to 0.0030%; Al: limited to 0.015% or less; P: limited to 0.015% or less; and S: limited to 0.010% or less with a balance consisting of iron and inevitable impurities, wherein, an amount of Mg and Ca contained in the composition of the welded metal satisfies $0.0006\% \leq Mg + Ca \leq 0.0040\%$ in mass %, and an index value of CeEBW obtained by substituting the composition of the welded metal into the following Formula, 2 is 0.56% or more and 0.73% or less.

$$CeEBB = C + (1/4)Mn + (1/15)Cu + (1/15)Ni + (1/5)Cr + (1/5)Mo + (1/5)V \cdots \textbf{(Formula 1)},$$

where C, Mn, Cu, Ni, Cr, Mo, and V represent mass % of elements contained in the composition of the steel material.

$$CeEBW = C + (1/4)Mn + (1/15)Cu + (1/15)Ni + (1/5)Cr + (1/5)Mo + (1/5)V \cdots \textbf{(Formula 2)},$$

where C, Mn, Cu, Ni, Cr, Mo, and V represent mass % of elements contained in the composition of the welded metal.
(2) In the electron-beam welded joint according to (1) described above, the steel material may have a thickness in the range of 45 mm to 150 mm.
(3) In the electron-beam welded joint according to (1) described above, the electron-beam welded joint may satisfy $0.8 \leq \delta_{BM}/\delta_{WM} \leq 1.25$, and $0.3 \leq \delta_{HAZ}/\delta_{WM} \leq 1.1$, where $\delta_{WM}$ is a CTOD value of the welded metal measured at a temperature of 0°C, $\delta_{HAZ}$ is a CTOD value of a weld heat-affected zone measured at a temperature of 0°C, and $\delta_{BM}$ is a CTOD value of the steel material measured at a temperature of 0°C.
(4) A steel material for electron-beam welding according to another aspect of the present invention provides a steel material for electron-beam welding having a composition consisting of by mass %: C: 0.02% to 0.10%; Si: 0.03% to 0.30%; Mn: 1.8% to 2.5%; Ti: 0.005% to 0.015%; N: 0.0020% to 0.0060%; O: 0.0010% to 0.0035%; Mg: 0.0003% to 0.0027%; Ca: 0.0003% to 0.0027%; Nb: 0% to 0.020%; V: 0% to 0.030%; Cr: 0% to 0.50%; Mo: 0% to 0.50%; Cu: 0% to 0.25%; Ni: 0% to 0.50%; B: 0% to 0.0030%; Al: limited to 0.015% or less; P: limited to 0.015% or less; and S: limited to 0.010% or less, with a balance consisting of iron and inevitable impurities, wherein an amount of Mg and Ca contained in the composition of the steel material satisfies $0.0006\% \leq Mg + Ca \leq 0.0040\%$ in mass %, a total amount of Cr, Mo, Cu and Ni in the composition of the steel is 0.70 or less, an index value CeEBB obtained by substituting the composition of the steel material into the following Formula 1 is 0.42% or more and 0.65% or less, a C/CeEBB, which is a ratio of the amount of C in the steel material by mass % relative to the index value CeEBB, may fall in the range of 0.02 to 0.15, the number of oxides having an equivalent circle diameter of 1.0 $\mu$m or more is 20 pieces/mm$^2$ or less at a thickness center portion in cross-section along a thickness direction of the steel material, and the number of oxides containing Mg of 7% or more and having an equivalent circle diameter of 0.05 $\mu$m or more and less than 0.5 $\mu$m is $1 \times 10^3$ to $1 \times 10^5$ pieces/mm$^2$ at the thickness center portion, the number of oxides containing Mg of 7% or more and having an equivalent circle diameter of 0.05 $\mu$m or more and less than 0.5 $\mu$m being measured by FE-TEM at a magnification 10000 to 1000000-fold.

$$CeEBB = C + (1/4)Mn + (1/15)Cu + (1/15)Ni + (1/5)Cr + (1/5)Mo + (1/5)V \cdots \text{(Formula 1)},$$

where C, Mn, Cu, Ni, Cr, Mo, and V represent mass % of elements in the composition of the steel material.

(5) In the steel material for electron-beam welding according to (4) above, the steel material may have a thickness in the range of 45 mm to 150 mm.

In order to obtain a predetermined CTOD value (fracture toughness value) in the electron-beam welded joint, it is important to appropriately balance the fracture toughness values of the steel material (BM), the welded metal (WM), and the heat-affected zone (HAZ).

In other words, even if the fracture toughness of the steel material (base metal) and the fracture toughness of the heat-affected zone are excellent, the welded metal serves as the starting point of the breakage when the fracture toughness of the welded metal is insufficient. Further, even if the fracture toughness of the welded metal is excellent, the heat-affected zone serves as the starting point and breakage advances when the fracture toughness of the heat-affected zone is insufficient. As described above, when the fracture toughness varies depending on portions of the welded joint, the fracture toughness of the welded joint as a whole deteriorates.

Brittle fracture at the welded portion (welded metal and heat-affected zone) of the steel material with a yield strength of 355 MPa class to which the electron-beam welding is applied starts to occur from the coarsened grain boundary ferrite appearing in the vicinity of the prior austenite grain, upper bainite appearing in the prior austenite grain in a lath form, ferrite side plate or other portion.

A unit of fracture surface at the time when the brittle fracture starts from the coarsened ferrite generated from the upper bainite or prior austenite grain boundary is dependent upon the grain diameter of the prior austenite. Thus, the fracture toughness of the welded portion can be improved by reducing the grain diameter of the prior austenite in the welded metal and the heat-affected zone by using the pinning effect obtained from precipitates or intra-granular transformation.

On the basis of the facts described above, according to the present invention, Mg and Ca, which are extremely strong deoxidation elements, are added to the steel together, and the insert metal containing Ni as well as the steel material (base metal) are involved, thereby dispersing the appropriate amount of fine oxide containing Mg having appropriate grain diameter in the prior austenite grain in the welded metal and the heat-affected zone of the welded portion having the electron-beam welding applied thereto. With the electron-beam welding employing the low amount of heat inputted, the fine oxide containing Mg remains in the heat-affected zone (HAZ) to function as the pinning grain that suppresses the grain growth. Thus, the grain growth in the heat-affected zone is suppressed, whereby the fracture toughness improves.

Further, the fine oxide containing Mg serves as a product nucleus of the intra-granular transformation to generate intra-granular ferrite in the heat-affected zone. As a result, the structure of the heat-affected zone particularly becomes fine, and the fracture toughnesses of the steel material (base metal), the heat-affected zone, and the welded metal improve while the balance between these three fracture toughnesses improves.

Effects of the Invention

According to the present invention, it is possible to suppress the deterioration in the fracture toughnesses of a welded metal and a heat-affected zone of an electron-beam welded joint formed by applying electron-beam welding to a weld portion of a steel material with a yield strength of 355 MPa class while an insert metal containing Ni is involved. Further, it is possible to provide an electron-beam welded joint having the fracture toughnesses of the steel material (base metal), the heat-affected zone and the welded metal appropriately balanced while reducing the cost of the steel material used for forming the welded joint.

Brief Description of the Drawings

FIG. 1 is a diagram qualitatively illustrating a relationship between strength, toughness and a microstructure of a steel material.

FIG. 2A is a diagram qualitatively illustrating a relationship between hardenability and grain diameter of a welded metal.

FIG. 2B is a diagram qualitatively illustrating a relationship between hardenability and the amount of high-carbon martensite in a heat-affected zone.

FIG. 3 is a diagram qualitatively illustrating a relationship between a ratio of hardness of the welded metal relative to hardness of the steel material (base metal), and the fracture toughnesses of the welded metal and the heat-affected zone.

FIG. 4 is a diagram qualitatively illustrating a relationship between CeEBB and a fracture toughness value ($\delta$c) of the welded metal and the heat-affected zone.

FIG. 5 is a diagram qualitatively illustrating a relationship between the fracture toughness value of the heat-affected zone and C/CeEBB.

FIG. 6 is a diagram illustrating a test piece having a notch.

FIG. 7 is a diagram illustrating a relationship between results of a CTOD test applied to the welded joint and the number of oxides contained in the steel material.

FIG. 8A is a diagram illustrating a correlation between the cooling rate of a cast piece and the number of small oxide grains containing Mg in the steel material.

FIG. 8B is a diagram illustrating a correlation between the cooling rate of a cast piece and the number of coarsened oxide grains contained in the steel material.

FIG. 9 is a diagram illustrating a correlation between the total oxygen amount in the steel material and the number of small oxide grains containing Mg in the steel material:

Embodiments of the Invention

When the tower of a wind power generator is constructed at sea, the steel material after being welded is used as it is without applying any thermal treatment to the joint portion. Thus, the welded metal and the heat-affected zone are required to have excellent toughness. According to the present invention, in order to make the welded metal have the toughness equal to that of the steel material (base metal), the electro-beam welding is applied to the weld portion while an insert metal containing Ni is involved.

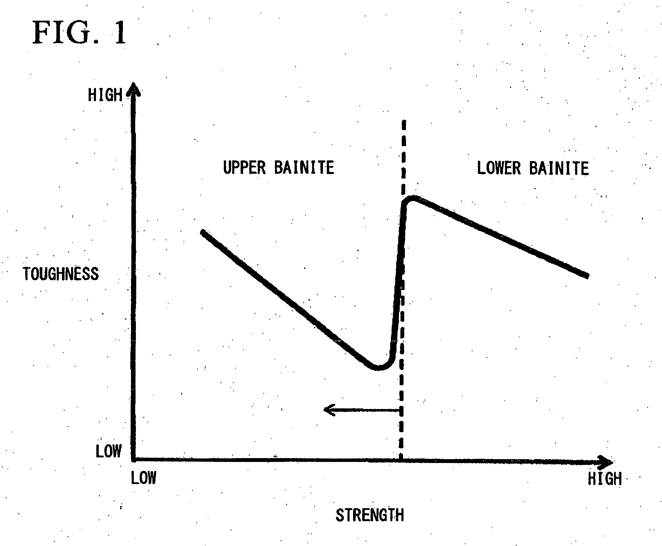

Conventionally, the electron-beam welding has been used, for example, for a steel material containing a large amount of Cr or Mo (so-called Cr-Mo steel), a stainless steel, or high-Ni steel, to which generation of oxide of the welded metal is not required. No brittle phase is generated in the heat-affected zone of the stainless steel. Further, in the case of Cr-Mo high-strength steel, the structure of the heat-affected zone is formed by lower bainite having excellent toughness as qualitatively illustrated in FIG. 1, exhibiting significantly high toughness.

The thickness and the strength of the steel material used for the electron-beam welded joint according to this embodiment of the present invention are not particularly limited. However, it is preferable to use, for example, a steel for a structure used, for example, for the tower of a wind power generator at sea and having a thickness in the range of 45 mm to 150 mm, YP (yield point) in the range of approximately 315 MPa to 550 MPa, and TS (tensile strength) in the range of approximately 450 MPa to 690 MPa. Depending on application, the upper limit of the thickness may be set to 120 mm or 130 mm. The lower limit of YP may be set to 340 MPa or 355 MPa, and the upper limit of YP may be set to 500 MPa, 460 MPa, or 420 MPa. The lower limit of TS may be set to 470 MPa or 490 MPa, and the upper limit of TS may be set to 600 MPa, 570 MPa, or 550 MPa.

This type of steel material is a steel for a structure having a YP of approximately 355 MPa, and has a strength lower than that of the Cr-Mo high-strength steel. Further, the structure of the heat-affected zone is an upper bainite having reduced toughness as qualitatively illustrated in FIG. 1. When this steel material is subjected to the electron-beam welding, a coarsened structure such as grain boundary ferrite or upper part bainite develops particularly in the heat-affected zone, and the high-carbon martensite (also referred to as island martensite or M-A constituent) is likely to be generated. Thus, in the case where the electron-beam welding is applied to the steel for a structure, it is not easy to secure the toughness of the heat-affected zone.

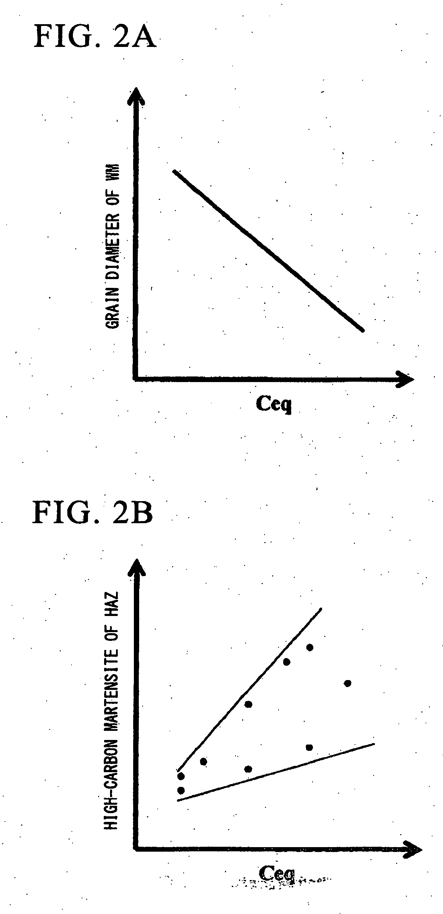

As for the relationship between the structure and the toughness, it is known that a reduction in the grain diameter is particularly effective in improving the toughness of the welded metal, and the high-carbon martensite reduces the toughness particularly of the heat-affected zone. Further, as for the relationship between the components and the structure, it is known that, by increasing the hardenability index Ceq, the grain diameter of the welded metal reduces as illustrated in FIG. 2A, and the high-carbon martensite of the heat-affected zone increases as illustrated in FIG. 2B.

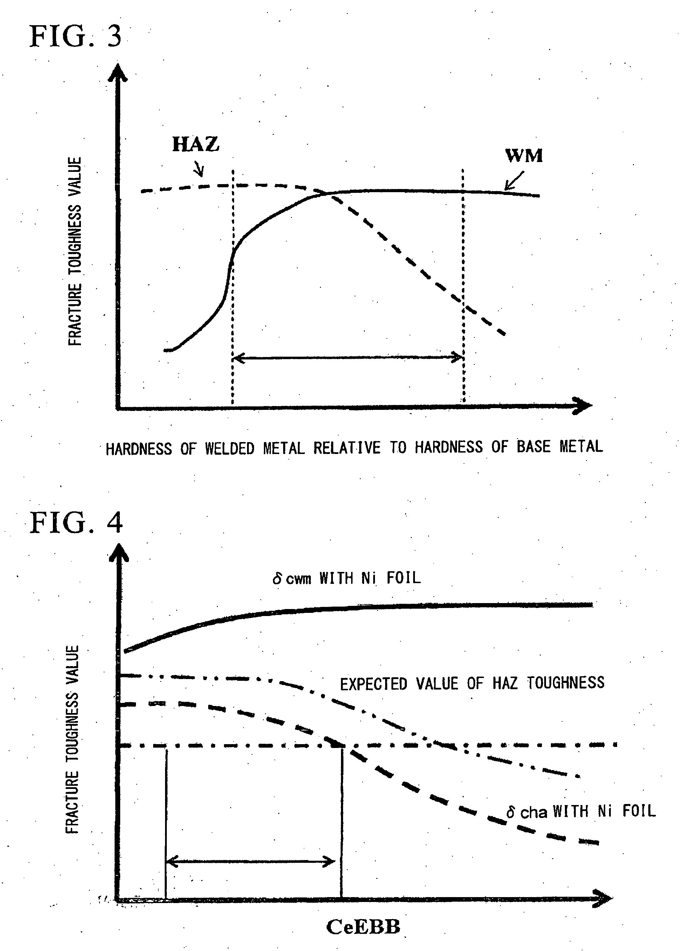

Further, in order to enhance the toughness of the welded metal and the heat-affected zone, the balance between the hardness of the welded metal and the hardness of the steel material (base metal) is important. In other words, as illustrated in FIG. 3, the toughness of the welded metal improves with the increase in the hardness of the welded metal relative to the hardness of the steel material (base metal). However, a deformation concentrates on the heat-affected zone due to the effect of the increase in the hardness of the welded metal, which results in a decrease in the toughness of the heat-affected zone. For these reasons, if the hardenability is increased to prevent generation of the upper bainite having less toughness, the welded metal hardens, which causes a problem of a deterioration in the toughness of the heat-affected zone.

As described above, the relationship between the hardenability of the steel and the grain diameter of the WM or high-carbon martensite of the HAZ, and the relationship between the ratio of the hardness of the WM relative to the hardness of the steel material (base metal) and the toughness of the welded joint are qualitatively known. However, conventionally, the idea of controlling the balance of the fracture toughness of the welded joint using the components of the steel material has not been conceived. Thus, for example, in the case where the electron-beam welding is applied to the steel material (base material) having enhanced hardenability, a problem of significantly deteriorating the toughness of the HAZ occurs although the toughness of the WM improves.

In view of the facts described above, the present inventors made a study of an index indicating the hardenability suitable for the electron-beam welding in order to obtain excellent toughness through the electron-beam welding formed by involving the insert, and found and newly introduced "indices CeEBB and CeEBW of hardenability after electron-beam welding." More specifically, the "index CeEBB of hardenability after electron-beam of steel material" given by the following Formula 1 and the "index CeEBW of hardenability after electron-beam of welded metal" given by the following Formula 2 are new indices obtained, by paying attention to the hardenability that largely affects the formation of the structure to further enhance the fracture toughness of the electron-beam welded joint while considering reliably generating a desired structure.

$$CeEBB = C + (1/4)Mn + (1/15)Cu + (1/15)Ni + (1/5)Cr + (1/5)Mo + (1/5)V \cdots \text{(Formula 1)}$$

In this formula, C, Mn, Cu, Ni, Cr, Mo, and V represent the amount of these elements contained (mass%) in the base metal of the electron-beam welded joint, in other words, the steel material used for the electron-beam welded joint. The unit of the value of CeEBB is mass %.

$$CeEBW = C + (1/4)Mn + (1/15)Cu + (1/15)Ni + (1/5)Cr + (1/5)Mo + (1/5)V \cdots \text{(Formula 2)}$$

In this formula, C, Mn, Cu, Ni, Cr, Mo, and V represent the amount of these elements contained (mass%) in the welded metal of the electron-beam welded joint. The unit of the value of CeEBW is mass %.

It should be noted that, in the case where any of these elements is not added to the steel material, 0 is substituted into Formula 1 and Formula 2 as the amount of that element.

For example, in the case where none of Cu, Ni, Cr, Mo, and V are added to the steel material, it is only necessary to use Formula 1' for CeEBB instead of Formula 1, and Formula 2' for CeEBW instead of Formula 2.

$$CeEBB = C + 1/4Mn \cdots \text{(Formula 1')}$$

$$CeEBW = C + 1/4Mn \cdots \text{(Formula 2')}$$

However, in the case where Cu, Ni, Cr, Mo, and V are contained as inevitable impurities, it is preferable to calculate CeEBB and CeEBW using Formula 1 and Formula 2, respectively.

CeEBB defined by Formula 1 is an index generated on the basis of the known carbon equivalent Ceq = C + (1/6)Mn + (1/15)Cu + (1/15)Ni + (1/5)Cr + (1/5)Mo + (1/5)V that correlates with the hardness and takes it into consideration that the amount of Mn reduces due to evaporation at the time of electron-beam welding, which leads to the reduction in the hardenability. It should be noted that a coefficient relating to Mn is set to 1/4 on the basis of the amount of reduction in the hardenability obtained through experiments and resulting from the decrease in the amount of Mn in the electron-beam welded joint formed by involving the insert metal. The value of this coefficient is larger than that in the known Ceq, which is 1/6.

The index value CeEBB is an index used for: (1) obtaining a desired range of hardenability of the welded metal after the electron-beam welding employing an Ni-containing foil, by adjusting the components of the steel material (base metal); (2) facilitating generation of fine ferrite in the welded metal; and (3) suppressing generation of the upper bainite or high-carbon martensite that reduce the toughness of the heat-affected zone.

FIG. 4 qualitatively illustrates the relationship between the fracture toughness values (δc) of the welded metal (WM) and the heat-affected zone (HAZ) in the electron-beam welded joint, and CeEBB. The solid line curve represents the fracture toughness value (δcwm) of the welded metal, and the broken line curve represents the fracture toughness value (δcha) of the heat-affected zone. The curve illustrated in the long dashed double-short dashed line represents the fracture toughness value of the heat-affected zone (expected values of HAZ toughness) on the assumption that the effect of the hardness of the WM is ignored. The expected values of the HAZ toughness are fracture toughness values measured, for example, through a fracture toughness test using a test piece subjected to a thermal treatment simulating a thermal history of the HAZ.

By using the insert metal such as Ni foil, the fracture toughness value ($\delta$cwm) of the WM can be increased to the same level as that of the steel material (base metal). With the increase in the index value CeEBB, the expected value of the HAZ toughness decreases due to the increase in the high-carbon martensite in the HAZ and the hardening of the HAZ. Further, with the increase in the CeEBB, the WM hardens, which results in a reduction in the $\delta$cha to be lower than the expected value of the HAZ toughness. It should be noted that, in the case where the Ni foil or other foil is used, the strength deteriorates if the CeEBB is low, although the toughness is not adversely affected. Thus, it is necessary to set the lower limit value of the CeEBB.

As described above, with the index value CeEBB, it is possible to systematically evaluate the fracture toughnesses of the welded metal and the heat-affected zone. By setting the index value CeEBB in an appropriate range, it is possible to make the fracture toughness value of the heat-affected zone more than or equal to the target value plotted with the dot-and-dash line. In the case where the pinning grain or intra-granular transformation described later is employed, the $\delta$cha improves due to the effect of the pinning or intra-granular transformation.

Next, the present inventors made a study of a relationship between the amount of C in the steel material (base metal) and the index value CeEBB, and the toughnesses of the steel material (base metal), the welded metal, and the heat-affected zone. As a result, it was found that it is preferable to control the upper limit of a ratio "C/CeEBB" of the amount of C in the steel material (base metal) relative to CeEBB. The technical meaning of the ratio "C/CeEBB" will be described below.

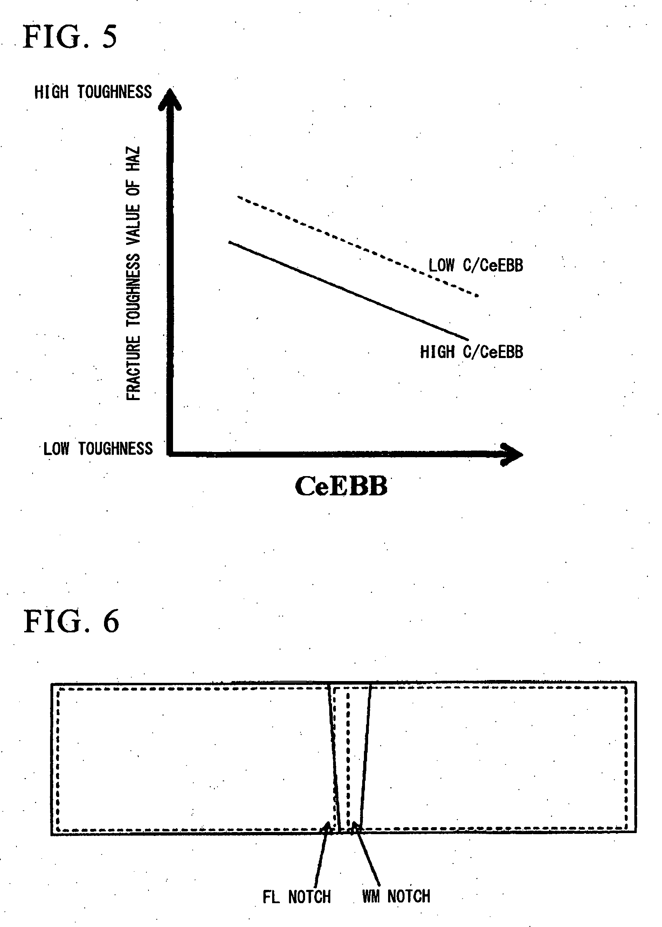

The ratio "C/CeEBB" is an index used for preventing the hardenability of the heat-affected zone from being undesirably unbalanced. In the present invention, the insert metal is used. Thus, Ni compensates for the reduction in the hardenability of the welded metal due to the reduction in the C/CeEBB. FIG. 5 illustrates a relationship between CeEBB and the fracture toughness value of the heat-affected zone.

CeEBB is an index relating to the hardenability. Thus, with the increase in CeEBB, the high-carbon martensite is more likely to be generated in the heat-affected zone, which results in the reduction in the fracture toughness value. Further, with the increase in the amount of C, the high-carbon martensite is more likely to be generated in the heat-affected zone. For these reasons, as illustrated in FIG 5, it is preferable to limit the C/CeEBB to secure the fracture toughness value of the heat-affected zone

The present inventors further made a study of appropriate components in the welded metal of the welded joint subjected to the electron-beam welding using the insert metal containing Ni. Ni is added to the welded metal from the Ni-containing insert metal. Thus, it is necessary to clearly set the appropriate amount of Ni and the appropriate CeEBW to secure the toughness of the welded metal.

The present inventors further made a study of a method of improving the balance between the fracture toughness value of the welded metal and the fracture toughness value of the heat-affected zone. As a result, it was found that it is possible to improve the toughness of the heat-affected zone and the welded metal of the electron-beam welded joint formed with the insert metal, by adding the appropriate amounts of Mg and Ca together to generate fine oxides containing Mg, which functions as the pinning grain and the nucleus of the intra-granular transformation.

Through preliminary tests described later, a relationship between the number of oxide grains and the fracture toughness value was examined. As a result, the following findings were obtained. An oxide grain containing Mg of 7% or more and having an equivalent circle diameter of 0.05 $\mu$m or more exhibits highly efficient pinning function and promotion function for intra-granular transformation, and largely contributes to reducing the size of the grain. On the other hand, the grain of the oxide (all oxides including the oxide containing Mg) having a relatively large grain diameter may function as a starting point of occurrence of the brittle fracture. In particular, the oxide having the equivalent circle diameter of 1.0 $\mu$m or more has a strong tendency to function as the starting point of the breakage, and thus, it is desirable to limit the number of this oxide as much as possible. Additionally, it is found that, by making the steel material contain an appropriate number of oxide grains containing Mg of 7% or more and having the equivalent circle diameter of 0.05 $\mu$m or more and less than 0.5 $\mu$m, it is possible to effectively reduce the size of the grain without causing the brittle fracture.

Through the preliminary tests, measurement was made on the number of two classes of oxide grains existing in the steel material, the classes including: (1) oxide grain having an equivalent circle diameter of 0.05 $\mu$m or more and less than 0.5 $\mu$m and containing Mg of 7% or more (hereinafter, also referred to as "small oxide containing Mg"); and (2) all oxides having the equivalent circle diameter of 1.0 $\mu$m or more (hereinafter, also referred to as "coarsened oxide"). Then, a quantitative study was made of a relationship between the number of oxide grains in each of the classes in the steel material, and the toughness value of a joint made of the steel material after the electron-beam welding.

In the preliminary tests, cast pieces were manufactured using a small experiment furnace by setting target components by mass% including: C: 0.07%, Si: 0.06%, Mn: 2.0%, P: 0.007%, S: 0.002%, Ti: 0.009%, Al: 0.004%, Mg: 0.0009%, Ca: 0.0007%, and N: 0.005%. When the cast pieces were manufactured, the number of oxides in each of the classes was controlled by controlling the following steps: (i) varying a processing period of time for a vacuum degassing process applied to a molten metal to adjust the total oxygen amount in the cast piece; and (ii) adjusting the amount of cold water for cooling the cast piece during casting to control the cooling rate for the cast piece in the temperature range of 1300°C to 1100°C to be in the range of 1 °C/min to 30 °C/min. The components of each of the cast pieces manufactured in the preliminary tests were almost the same as the target components described above. Further, the total oxygen amount of each of the manufactured cast pieces fell within the range of 11 ppm to 39 ppm. By using the obtained cast pieces, steel sheets having a thickness of 50 inm were manufactured through ACC described later. The number of oxide grains in the steel materials described above was measured through the method used in Examples described later.

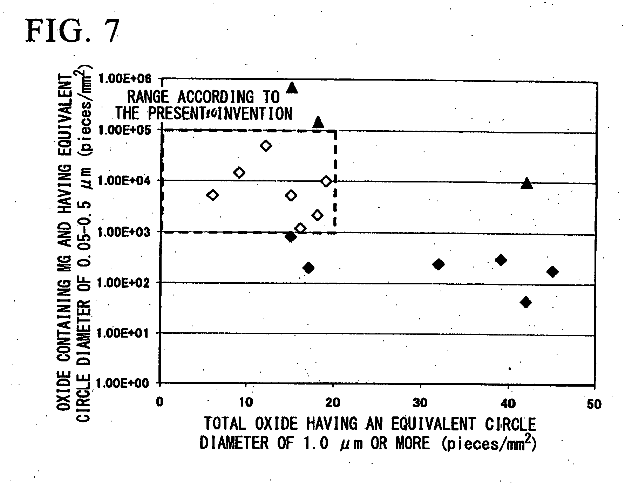

Further, electron-beam welding was applied to each of these steel materials to manufacture an I-groove butt-welded joint by inserting an Ni foil between groove faces to obtain a welded metal having an Ni concentration of 2%. Details of this welding will be described in Examples below. Test pieces for CTOD each having a notch formed at a melted portion (FL) of the welded joint were manufactured, and CTOD tests were performed at a test temperature of 0°C. In the case where the resulting fracture toughness value of the HAZ, which is $\delta_{HAZ}$, is 0.3mm or more, the sample was determined to be acceptable, and the other cases were determined to be unacceptable. FIG. 7 to FIG 9 show the results of the preliminary tests. In FIG 7 to FIG. 9, hollow marks represent samples determined to be acceptable in the CTOD tests, and solid marks represent samples determined to be unacceptable. Further, rhombus marks represent samples having the oxygen amount of 0.0035% or less in the steel, and triangle marks represent samples having the oxygen amount of over 0.0035%.

FIG. 7 illustrates a relationship between the results of the CTOD tests and the number of the small oxide containing Mg described above and the coarsened oxide. In FIG. 7, all the marks (hollow rhombus) of the welded joint determined to be acceptable in the CTOD tests fall within a squared range with a broken line indicated as "range according to the present invention." More specifically, it was found that the CTOD value $\delta_{HAZ}$ of the HAZ is 0.3mm or more under the condition where (1) the number of oxides having an equivalent circle diameter of 1.0 μm or more (the coarsened oxide) is 20 pieces/mm$^2$ or less at a thickness center portion of the steel material, and (2) the number of oxides containing Mg of 7% or more and having an equivalent circle diameter of 0.05 μm or more and less than 0.5 μm (the small oxide containing Mg) is in the range of $1 \times 10^3$ to $1 \times 10^5$ pieces/mm$^2$ at a thickness center portion.

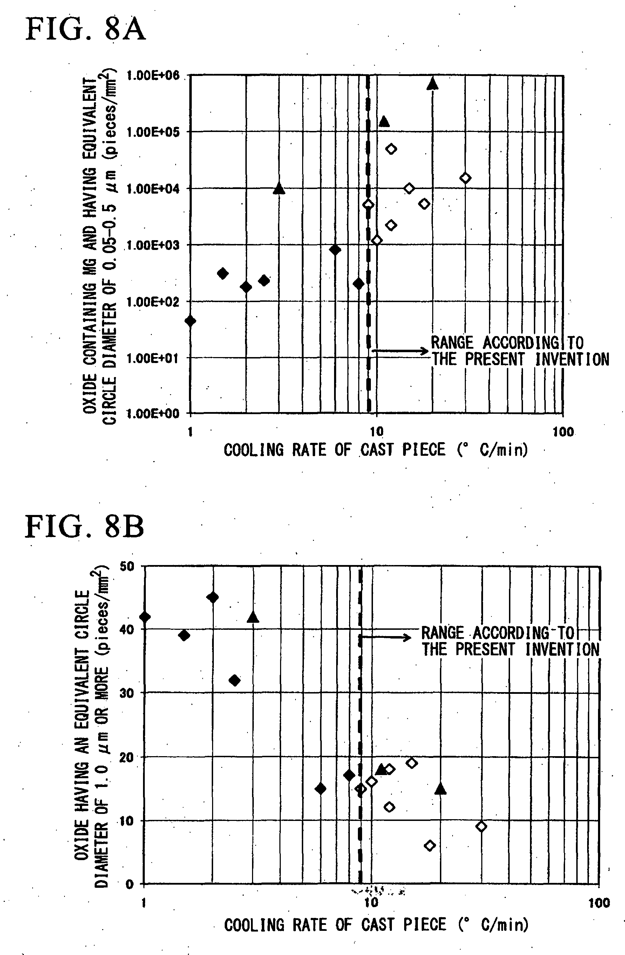

Next, a study was made of a correlation between the cooling rate for the cast pieces in the temperature range of 1300°C to 1100°C and the number of small oxide grains containing Mg. As illustrated in FIG 8A, with the increase in the cooling rate, the number of the small oxides containing Mg at the thickness center portion is more likely to increase. In particular, for the samples (rhombus marks) having the total oxygen amount in the steel adjusted to be 0.0035% or less through a vacuum degassing process, in the case where the cooling rate for the cast pieces is 9 °C/min or more, it is increasingly apparent that the number of the oxide is dependent upon the cooling rate, and is more likely to increase. As a result, within the above-described range of the total oxygen amount and the cooling rate, it was possible to control the number of the small oxide containing Mg to be in the range of $1 \times 10^3$ to $1 \times 10^5$ pieces/mm$^2$. In FIG. 8A, this cooling rate range is indicated with the broken line and the arrow as the "range according to the present invention." Further, all the samples that satisfy the above-described range of the total oxygen amount and the cooling rate have the CTOD value $\delta_{HAZ}$ of the HAZ of 0.3 mm or more (rhombus hollow marks).

Next, a study was made of a correlation between the cooling rate for the cast pieces in the temperature range of 1300°C to 1100°C and the amount of the coarsened oxide grain. As illustrated in FIG. 8B, with the increase in the cooling rate, the number of the coarsened oxide at the thickness center portion is more likely to decrease. In particular, for the samples (rhombus marks) having the total oxygen amount in the steel adjusted to be 0.0035% or less through the degassing process, in the case where the cooling rate for the cast pieces is 9 °C/min or more, the amount of the coarsened oxide containing Mg was 20 pieces/mm$^2$ or less. In FIG. 8B, this cooling rate range is indicated with the broken line and the arrow as the "range according to the present invention."

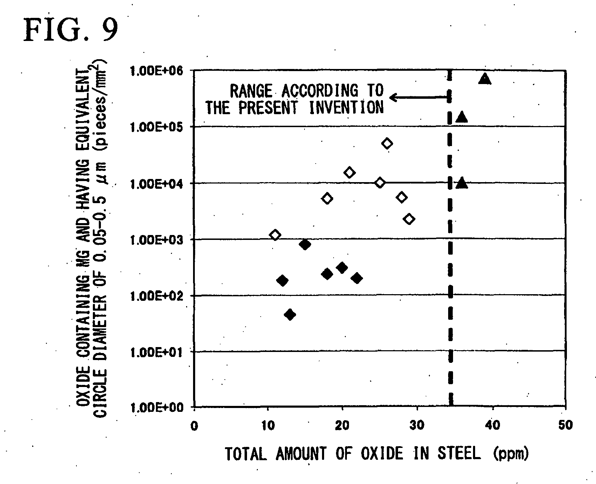

Next, a study was made of a correlation between the total oxygen amount in the steel and the amount of small oxide grain containing Mg. As illustrated FIG 9, with the increase in the total oxygen amount, the number of small oxide grains containing Mg at the thickness center portion is more likely to increase. In the case where the total oxygen amount exceeds 0.0035%, there is a possibility that the number of the small oxide containing Mg cannot be controlled to be $1 \times 10^5$ pieces/mm$^2$ or less even if the cooling rate of the cast piece is set to 9 °C/min or more. In this case, it is considered that the excessive number of oxide grains serve as the starting point of the brittle fracture, deteriorating the CTOD test values. In FIG. 9, the range of the total oxygen amount of 0.0035% (35 ppm) or less is indicated with the broken line and the arrow as the "range according to the present invention." Within this oxygen amount range, all the samples subjected to the cooling rate for the cast pieces set to 9 °C/min or more show the $\delta_{HAZ}$ value of 0.3 mm or more (rhombus hollow marks).

On the basis of all the results of the preliminary tests, the present inventors obtained the following findings. It is possible to improve the fracture toughness of the heat-affected zone and the welded metal of the electron-beam welded joint, by (1) reducing the coarsened oxide grain existing at the thickness center portion, and (2) appropriately controlling the amount of the small oxide containing Mg serving as the nucleus for the intra-granular transformation. Further, it was found that, in order to control the the size of or the number of the inclusion grains, it is effective to (3) control the total oxygen amount in the steel material to be in the appropriate range, and (4) control the cooling rate for the steel material during casting to be in the appropriate range. It should be noted that it is considered that the required cooling rate for the cast pieces of 9 °C/min, which can be obtained through the preliminary experiments, may vary depending, for example, on ladle refinement equipment of a steel-making factory that melts, manufactures or casts steels, or conditions of casting equipment (for example, degree of vacuum of the vacuum degassing, and shapes of weir for casting). Thus, in order to improve the CTOD test results, it is only necessary to obtain a predetermined number of the oxide grains having predetermined component ranges, and it is not always necessary to limit the cooling rate during casting to 9 °C/min or more.

On the basis of the results of the preliminary experiments described above, according to the present invention, the amount of C in the steel material (base metal), the CeEBB, the C/CeEBB, and the size of and the number of oxide grains are controlled to be in the appropriate range, and the appropriate amount of Mg and/or Ca is added. Further, by applying the electron-beam welding to the weld portion while inserting the insert metal containing Ni, a ratio of the fracture toughness values of the welded metal and the heat-affected zone relative to the fracture toughness value of the steel material (base metal) improves, and the variation in the fracture toughness value $\delta c$ can be minimized.

The steel material according to this embodiment of the present invention as defined in claim 1 contains, by mass%, C: 0.02% to 0.10%, Si: 0.03% to 0.30%, Mn: 1.8% to 2.5%, Ti: 0.005% to 0.015%, N: 0.0020% to 0.0060%, O: 0.0010% to 0.0035%, Mg: 0.0003% to 0.0027%, and Ca: 0.0003% to 0.0027%. Of the components described above, the amounts of Mg and Ca contained in the steel material are required to satisfy $0.0006\% \leq Mg + Ca \leq 0.0040\%$. Further, of the inevitable impurities contained in the components described above, it is required to limit P: 0.015% or less, S: 0.010% or less, and Al: 0.015% or less.

The steel material described above may contain Nb: 0% to 0.020%, V: 0% to 0.030%, Cr: 0% to 0.50%, Mo: 0% to 0.50%, Cu: 0% to 0.25%, Ni: 0% to 0.50%, and B: 0% to 0.0030% depending on applications.

The rest of the composition of the steel material described above includes iron and inevitable impurities.

In the case where the electron-beam welding is applied to the weld portion of the steel material by inserting the insert metal containing Ni, the welded metal has a reduced Mn and O and increased Ni. As a result, the welded metal according to claim 1 contains, by mass%, C: 0.02% to 0.10%, Si: 0.03% to 0.30%, Mn: 1.2% to 2.4%, Ni: 1.0% to 2.3%, Ti: 0.005% to 0.015%, N: 0.0020% to 0.0060%, O: 0.0004% to 0.0020%, Mg: 0.0003% to 0.0027%, and Ca: 0.0003% to 0.0027%. The amounts of Mg and Ca in the composition of the welded metal described above are required to satisfy $0.0006\% \leq Mg + Ca < 0.0040\%$. Further, of the inevitable impurities contained in the composition of the welded metal described above, it is required to limit Al: 0.015% or less, P: 0.015% or less, and S: 0.010% or less.

Further, the welded metal described above may contain Nb: 0% to 0.020%, V: 0% to 0.030%, Cr: 0% to 0.50%, Mo: 0% to 0.50%, Cu: 0% to 0.25%, and B: 0% to 0.0030% depending on applications.

The rest of the composition of the welded metal described above includes iron and inevitable impurities.

Next, the reason for adding elements, and the amount of the elements added will be described. Note that the unit "%" means mass %.

C is an element that contributes to improving the strength. In order to secure the strength necessary for the welded structure, C of 0,02% or more is added. The lower limit of the amount of C is set preferably to 0,03%, more preferably to 0.04%. On the other hand, in the case where the amount of C exceeds 0.10%, the hardenability increases and the toughness deteriorates. Thus, the upper limit of the amount of C is set to 0.10% or less. The upper limit is set preferably to 0.08% or 0.07%, and more preferably to 0.06%.

Si is a deoxidation element, and is effective in securing the strength of the steel sheet. Thus, Si of 0.03% or more is added. However, the excessive amount of Si added leads to generation of the large amount of island martensite, particularly deteriorating the toughness of the welded metal and the heat-affected zone. For this reason, the upper limit of the amount of Si is set to 0.30%. The upper limit of the amount of Si is preferably to 0.25% or 0.20%, more preferably to 0.15%.

Mn is effective in securing the toughness and enhancing the hardenability to secure the strength of the steel sheet. In the case where the amount of Mn is less than 1.8%, it is not possible to sufficiently obtain the toughness, strength, and hardenability of the steel material. Further, part of Mn disappears during the electron-beam welding due to evaporation from the welded metal. Thus, in order to secure the toughness, strength and hardenability of the steel material, and the hardenability of the welded metal, Mn of 1.8% or more is added.

On the other hand, in the case where the amount of Mn exceeds 2.5%, the hardenability excessively increases, and in particular, the toughness of the heat-affected zone reduces. For this reason, the upper limit of the amount of Mn is set to 2.5%. The upper limit is set preferably to 2.4%, more preferably to 2.3%.

P is an inevitable impurity, and has an adverse effect on the toughness of the steel material (BM), the welded metal (WM), and the heat-affected zone (HAZ). In particular, in order to secure the toughness of the heat-affected zone (HAZ), it is preferable to reduce the amount of P, and the amount of P is limited to 0.015% or less. It is preferable to set the amount of P to 0.010% or less or 0.006% or less. It is not necessary to particularly set the lower limit of the amount of P, and the lower limit of the amount of P is 0%. However, from the viewpoint of the manufacturing cost, the extremely low amount of P of less than 0.001% is not necessary, The amount of P may be set to 0.001% or more.

S is an inevitable impurity, and forms MnS. MnS employs fine TiN or oxide containing Mg as a nucleus to precipitate, and forms Mn-poor area. This facilitates generation of the intra-granular ferrite (intra-granular transformation). For this reason, it is preferable to contain S of 0.0001% or more. The lower limit of the amount of S is set preferably to 0.001%. Depending on applications, the lower limit of the amount of S may be set to 0.002%. If this effect is not necessary, the lower limit of the amount of S may not be set, and it may be possible to set the lower limit to 0%. The excessive amount of S contained particularly leads to a reduction in the toughness of the heat-affected zone (HAZ). Thus, the upper limit of the amount of S is set to 0.010% or less. The upper limit of the amount of S is set preferably to 0.007% or 0.005% or less.

Ti combines with N or O to form fine nitride (TiN) or oxide that contributes to reducing the size of the grains. With the electron-beam welded joint employing the low heat-inputted amount, fine TiN remains in the heat-affected zone (HAZ), and functions as the nucleus of the intra-granular transformation.

In order to particularly improve the toughness of the heat-affected zone (HAZ) resulting from suppression of the grain growth or intra-granular transformation, Ti of 0.005% or more is added. The lower limit of the amount of Ti is set preferably to 0.007% or more. On the other hand, the excessive amount of Ti leads to generation of coarsened TiN, deteriorating the toughness. Thus, the upper limit of the amount of Ti is set to 0.015%. The upper limit of the amount of Ti is set preferably to 0.012%.

N is an element that combines with Ti to form fine nitride. N reduces the seize of the grain in the steel material (base metal), prevents coarsening of the grain diameter in the heat-affected zone resulting from the pinning effect, and reduces the size of the grain diameter resulting from the intra-granular transformation, thereby particularly enhancing the toughness of the heat-affected zone (HAZ). In order to obtain this effect, the lower limit of the amount of N is set to 0.4020%. Preferably, the lower limit of the amount of N is set to 0.0030%.

On the other hand, the excessive amount of N has an adverse effect on the toughness of the steel material (base metal) and the heat-affected zone. Thus, the upper limit of the amount of N is set to 0.0060%. Preferably, the upper limit of the amount of N is set to 0.0050%.

O generates fine oxide containing Mg. In order to obtain this additive effect, O of 0.0010% or more is added. Note that, if application of the electron-beam welding according to this embodiment of the present invention is performed under normal conditions, approximately half of the amount of O in the steel material is more likely to dissipate from the welded metal. For this reason, the lower limit of the amount of O in the steel material (base metal) is set preferably to 0.0015% or more, more preferably to 0.0020% or more.

However, the excessive amount of O leads to coarsening of oxide. This serves as the starting point of breakage, and has an adverse effect on the toughness of the steel material (base metal) or heat-affected zone. For these reasons, the upper limit of the amount of O in the steel material (base metal) is set to 0.0035%. In the case where the excessive oxide is more likely to occur in the steel material depending on composition or conditions in the manufacturing processes, the upper limit of the amount of O may be set to 0.0032%, 0.0029%, or 0.0025%.

Mg is an extremely important element in the present invention. Mg forms fine oxide, and contributes to facilitating intra-granular transformation. In order to utilize Mg oxide as a pinning grain, Mg of 0.0003% or more is added. To facilitate the intra-granular transformation, it is preferable to set the amount of Mg to 0.0005%, or 0.0007% or more.

On the other hand, in the case where the amount of Mg added exceed 0.0027%, coarsened oxide is likely to occur, deteriorating the toughness of the steel material (base metal) and the heat-affected zone. Thus, the upper limit of the Mg is set to 0.0027%. More preferably, the upper limit of the amount of Mg is set to 0.0025%, 0.0023%, or 0.0021%.

Ca is a strong deoxidation element, suppresses coarsening of Mg oxide, and secures fine Mg oxide. Thus, Ca of 0.0003% or more is added. Further; Ca forms CaS, and is effective in suppressing generation of MnS elongated in the rolling direction. In order to improve properties in the thickness direction of the steel material, and particularly improve an anti-lamella-tear property, it is preferable to add Ca of 0.0005% or more, or 0.0007% or more.

On the other hand, in the case where the amount of Ca exceeds 0.0027%, coarsened oxide is likely to occur, deteriorating toughness of the steel material (base metal) and the heat-affected zone. For these reasons, the upper limit of the amount of Ca is set to 0.0027%. More preferably, the upper limit of the amount of Ca is set to 0.0025% or 0.0023%.

According to the present invention, Mg and Ca are added together. This is because, by adding Ca, deoxidation is enhanced to suppress coarsening of Mg oxide. More specifically, since Ca forms oxide before formation of Mg oxide, coarsening of Mg oxide is suppressed, and generation of fine oxide containing Mg is promoted.

The fine Mg oxide functions as the pinning grain and the intra-granular transformation nucleus, and also serves as a nucleus of TiN. Mg and Ca are added in a total amount of 0.0006% or more to reinforce the nucleus of ferrite in a prior austenite grain to reduce the size of the structure in the prior austenite grain, thereby suppressing generation of coarsened austenite. The lower limit of the total amount of Mg and Ca may be set to 0.0010% or 0.0015%;

The excessive amount of Mg and Ca in total makes oxide aggregate and coarsen, which adversely affects the toughness of the steel material (base metal) and the heat-affected zone. Thus, the upper limit of the total amount is set to 0.0040%. The upper limit of the total amount of Mg and Ca is set preferably to 0.0030%, more preferably to 0.0025%.

In the steel material according to this embodiment of the present invention, a predetermined amount of Al, Nb, and/or V may be further contained for the following reasons.

Al is a selective element, and may be added depending on applications. The amount of Al added may be 0%. In the case where Al is added, Al has an effect of deoxidizing and reducing the size of the microstructure, thereby improving the toughness of the steel material (base metal). In order to obtain this effect, it is preferable to add Al of 0.001% or more. More preferably, the amount of Al is set to 0.003% or more, or 0.005% or more.

However, Al oxide has less ability to generate a ferrite transformation nucleus, and hardly contributes to intra-granular transformation. Thus, in the case where Al is added, and in the case where Al is contained as inevitable impurities, the upper limit of the amount of Al is limited to 0.015% or less. If the Al oxide coarsens, the coarsened Al oxide serves as a start point of breakage. Thus, the upper limit of Al is set preferably to 0.012%, more preferably to 0.010% or less.

Nb is effective in improving hardenability, and enhancing the strength of the steel sheet. Thus, depending on applications, Nb of 0.001% or more may be added, and preferably Nb of 0.003% or more is added. However, the excessive amount of Nb added particularly leads to a reduction in toughness of the heat-affected zone (HAZ). Thus, the upper limit of the amount of Nb is set to 0.020%. The upper limit of the Nb is set preferably to 0.012%, more preferably to 0.010%. The addition of Nb is not essential, and thus, the amount of Nb added may be 0%.

Addition of V is not essential, and the amount of V added may be 0%. In the case where a small amount of V is added depending on application, V has an effect of enhancing hardenability and resistance to temper softening. In order to obtain these effects, V of 0.005% or more is added, and preferably, V of 0.010% or more is added. However, the excessive amount of V added particularly leads to a reduction in the toughness of the heat-affected zone (HAZ). Thus, the upper limit of the amount of V added is set to 0.030%. The upper limit of the amount of V is set preferably to 0.025%. In the case where stable hardenability is necessary, the amount of V may be limited to less than 0.020%, or 0.018% or less.

The steel material according to this embodiment of the present invention may further contain one or more elements of Cr, Mo, Cu, and Ni depending on applications. These elements are effective in improving the toughness. In order to obtain this effect, Cr, Mo, Cu, and/or Ni is added in an amount of 0.05% or more. Addition of these elements is not essential, and the amount of elements added may be 0%.

Further, Cr, Mo, Cu, and Ni are expensive elements. Thus, from the economical viewpoint, the amount of these elements is set to Cr: 0.50% or less, Mo: 0.50% or less, Cu: 0.25% or less, and Ni: 0.50% or less. In particular, in the case where the excessive amount of these elements is added to the steel material according to this embodiment of the present invention containing increased amount of Mn, the hardenability undesirably increases, possibly deteriorating balance of toughness. Thus,

the total amount of Cr, Mo, Cu, and/or Ni is set to 0.70% or less, and preferably, the total amount of these elements is set to 0.50% or less.

The steel material according to this embodiment of the present invention may further contain B depending on applications. The addition of B is not essential, and the amount of B may be 0%. The small amount of B added makes the hardenability significantly improve. Thus, depending on applications, for example, in the case where it is difficult to secure a cooling rate, B may be added in an amount of 0.0030% at most. In order to obtain the effect of improving the hardenability, B of 0.0002% or more is added.

In the case where the electron-beam welding is applied to the steel material according to this embodiment of the present invention, the amount of Mn and the amount of O in the welded metal are lower than the amount of Mn and the amount of O of the steel material (base metal). This is because part of Mn evaporates from the welded metal during application of the electron-beam welding in a vacuum state, and oxide floats to the surface and is discharged from the welded metal. Thus, the amount of Mn and the amount of O in the welded metal are set to Mn: 1.2% to 2.4% and O: 0.0004% to 0.0020% by mass %. The lower limit of the amount of Mn in the welded metal may be set to 1.4% or 1.6%, and the upper limit of the amount of Mn may be set to 2.0% or 1.8%.

It should be noted that, by applying the electron-beam welding according to this embodiment of the present invention under normal conditions, approximately half of the amount of O in the steel.material is more likely to dissipate from the welded metal. For example, in the case where the amount of O in the steel material is 0.0035% or less, the amount of O in the welded metal of the welded joint is more likely to be approximately 0.0020% or less. The amount of O in the welded metal may be set to less than 20 ppm, 19 ppm or less, 18 ppm or less, or 17 ppm or less. Although it is not always necessary to set the lower limit for the amount of O in the welded metal, the lower limit may be set to 4 ppm or more, 8 ppm or more, 10 ppm or more, 12 ppm or more, or 14 ppm or more.

When the electron-beam welded joint is formed using the steel material according to this embodiment of the present invention, the insert metal containing Ni is inserted between the groove faces of the weld target portion (groove butted portion) to add Ni to the welded portion, thereby enhancing the toughness of the welded metal. In order to significantly enhance the toughness of the welded metal, and preferably make the fracture toughness value of the welded metal 0.8 times or more that of the steel material (base metal), it is necessary to set Ni to 1.0% or more in the welded metal. The lower limit of the amount of Ni in the welded metal may be set to 1.3% or 1.6%.

On the other hand, the excessive amount of Ni renders an increase in the hardness of the welded metal, adversely affecting the fracture toughness of the heat-affected zone. In particular, to secure the toughness of the heat-affected zone, the upper limit of the amount of Ni is set to 2.3% or less. Note that the excessive amount of Ni in the welded metal renders high-carbon martensite to be more likely generated, increasing hardness of the welded metal and possibly reducing the fracture toughness. The upper limit of the amount of Ni in the welded metal may be set to 2.2% or 2.0%.

In the case where the amount of Mg and Ca added to enhance toughness of the welded metal resulting from the pinning effect is low, it is preferable to increase the amount of Ni in the welded metal. It may be possible to use Ni alloy or pure Ni as the insert metal. Use of the pure Ni contributes to simplification.

According to the steel material for electron-beam welding of this embodiment of the present invention, the components of the steel material (base metal) are substituted into the following Formula 1 to obtain CeEBB, which is an index value of hardenability after electron-beam welding, and the index value CeEBB is set to be in the range of 0.42% to 0.65%. Note that the unit % represents mass %.

$$CeEBB = C + (1/4)Mn + (1/15)Cu + (1/15)Ni + (1/5)Cr + (1/5)Mo + (1/5)V \quad \cdots \text{(Formula 1)}$$

In this Formula, C, Mn, Cu, Ni, Cr, Mo and V represent the amount of elements (mass %) contained in the steel material. The unit for the CeEBB value is mass %.

Formula 1 for obtaining an index CeEBB of hardenability after electron-beam welding is created by taking into consideration that the welded metal of the electron-beam welded joint formed by inserting the insert metal containing Ni between the groove surfaces of the weld target portion contains Ni in an amount of 1.0% to 2.3%.

The lower limit of the index value CeEBB of hardenability after electron-beam welding of the steel material is set to 0.42% in order to secure the strength of the steel material (base metal). The CeEBB may be set preferably to 0.45% or more, more preferably to 0.48% or more. On the other hand, in the case where the CeEBB exceeds 0.65%, the fracture toughness of the heat-affected zone becomes insufficient. Thus, the upper limit of the CeEBB is set to 0.65%. The upper limit of the CeEBB may be set preferably to 0.60%, more preferably to 0.58%.

According to the steel material of this embodiment of the present invention, the number of all the oxide grains having an equivalent circle diameter of 1.0 $\mu$m or more (coarsened oxide grain) is set to 20 pieces/mm$^2$ or less at a thickness center portion in cross-section along the thickness direction of the steel material. Further, at the same thickness center portion, the number of oxide grains containing Mg of 7% or more and having an equivalent circle diameter of 0.05 $\mu$m or more and less than 0.5 $\mu$m (small grain containing Mg) is set to $1 \times 10^3$ to $1 \times 10^5$ pieces/mm$^2$. In the case where the number of the coarsened oxide grains exceeds 20 pieces/mm$^2$, the oxide grains serve as the starting point of breakage, which results in insufficient fracture toughness of the heat-affected zone and the welded metal. In the case where the small grains containing Mg is less than $1 \times 10^3$, sufficient pinning effect due to the grain containing Mg cannot be obtained, which adversely affects the toughness of the heat-affected zone and the welded metal. In the case where the number of the small grains containing Mg exceeds $1 \times 10^5$, the excessive grains containing Mg are more likely to serve as the starting point of breakage, which results in insufficient fracture toughness of the heat-affected zone and the welded metal.

It should be noted that the number of coarsened oxide grains is measured on test pieces taken from the center portion in cross-section along the thickness direction of the steel material with a field-emission scanning electron microscope (FE-SEM).

Further, the number of the small oxide grains containing Mg is measured on test pieces taken from the center portion in cross-section along the thickness direction of the steel sheet with a field-emission transmission electron microscope (FE-TEM). Further, grains having Mg of 7% or more by weight ratio measured through an EDX method (energy dispersive x-ray spectrometry) by creating an extraction-replica film, and observing it with a TEM are determined to be the oxide grains containing Mg of 7% or more.

The ratio of the amount of C relative to the index CeEBB of hardenability after electron-beam welding (C/CeEBB) is an index indicating balance between the hardenability of the welded metal and the hardenability of the heat-affected zone and the steel material (base metal). The C/CeEBB takes a value of 0.15 or less. In the case where the amount of C becomes excessive with respect to the amount of Mn, Cu, Ni, Cr, Mo, and/or V, and the C/CeEBB exceeds 0.15, the fracture toughness of the heat-affected zone may deteriorate. The upper limit of the C/CeEBB is set preferably to 0.13, more preferably to 0.11.

In the case where the electron-beam welding is applied while the insert metal containing Ni is inserted between the groove faces of the weld portion, Ni compensates for the reduction in the hardenability of the welded metal due to the reduction in the C/CeEBB of the steel material (base metal).

The lower limit value of the C/CeEBB is substantially a value in the case where the amount of C is the lower limit value and the amount of Mn, Cu, Ni, Cr, Mo, and V is the upper limit value, and is 0.02 in the case of the present invention.

It should be noted that the cost of alloying can be reduced by increasing the amount of C and reducing the amount of Cu, Ni, Cr, Mo, and/or V. Thus, the lower limit of C/CeEBB is set more preferably to 0.04 or more, much more preferably to 0.06 or more.

Further, according to the electron-beam welded joint of this embodiment of the present invention formed by inserting the insert metal containing Ni between the groove faces of the weld portion, the CeEBW, which is an index value of hardenability after electron-beam welding of the welded metal, is obtained by substituting the composition of the welded metal into the following Formula 2, and the index value CeEBW is set to be in the range of 0.56% to 0.73%. It should be noted that the unit % represents mass %.

$$CeEBW = C + (1/4)Mn + (1/15)Cu + (1/15)Ni + (1/5)Cr + (1/5)Mo + (1/5)V \quad \cdots \text{(Formula 2)}$$

In this Formula, C, Mn, Cu, Ni, Cr, Mo, and V represent the amount of elements (mass %) contained in the welded metal. The unit for the CeEBW value is mass %.

In order to secure the hardenability of the welded metal, the CeEBW of the welded metal is set to 0.56% or more. The lower limit of the CeEBW of the welded metal is set preferably to 0.60%. In the case where the CeEBW of the welded metal exceeds 0.73%, the welded metal hardens, and the fracture toughness of the welded joint becomes insufficient. The upper limit of the CeEBW of the welded metal is set preferably to 0.70%.

Preferably, the welded joint formed by applying electron-beam welding to the steel material according to this embodiment of the present invention has the CTOD value $\delta_{WM}$ of the welded metal, the CTOD value $\delta_{HAZ}$ of the heat-affected zone, and the CTOD value $\delta_{BM}$ of the steel material (base metal) that satisfy the following Formula 3 and Formula 4.

$$0.8 \leq \delta_{BM}/\delta_{WM} \leq 1.25 \quad \cdots \text{(Formula 3)}$$

$$0.3 \leq \delta_{HAZ}/\delta_{WM} \leq 1.1 \quad \cdots \text{(Formula 4)}$$

In these formulae, the $\delta_{WM}$, the $\delta_{HAZ}$, and the $\delta_{BM}$ are the minimum values of the CTOD values obtained from six three-points-bending CTOD tests at 0°C. In the case where the CTOD value is 1.0 mm or more, ductile failure was considered to occur, and the above-described calculation was performed by setting the CTOD value to 1.0 mm.

In the case where the $\delta_{BM}/\delta_{WM}$ is less than 0.8 and/or the $\delta_{HAZ}/\delta_{WM}$ is less than 0.3, the balance between the $\delta_{BM}$, the $\delta_{WM}$ and the $\delta_{HAZ}$ extremely deteriorates, and the fracture toughness of the welded portion largely deteriorates. Thus, the lower limit of the $\delta_{BM}/\delta_{WM}$ is set to 0.8, and the lower limit of the $\delta_{HAZ}/\delta_{WM}$ is set to 0.3. The upper limit of the $\delta_{BM}/\delta_{WM}$ is set to 1.25 or less since the $\delta_{WM}$ is preferably 0.8 times or more of the $\delta_{BM}$.

It is preferable that the $\delta_{WM}$ and the $\delta_{BM}$ be almost equal, and the preferably upper limit of the $\delta_{BM}/\delta_{WM}$ is 1.1. Similarly, it is preferable that the $\delta_{HAZ}$ and the $\delta_{WM}$ be almost equal, and the upper limit of the $\delta_{HAZ}/\delta_{WM}$ be set to 1.1 or less.

In the case where the electron-beam welding is applied to the steel employing the fine oxide containing Mg as in the present invention, it is difficult to enhance the fracture toughness of the HAZ to be equivalent to that of the steel material (base metal). Thus, in particular, in the case where the fracture toughness of the steel material (base metal) and the WM needs to be enhanced, it is preferable to set the upper limit of the $\delta_{HAZ}/\delta_{WM}$ to 0.6, and it is more preferable to set the upper limit to 0.5.

In other words, according to the steel material of this embodiment of the present invention, it is possible to obtain the welded joint having reduced deterioration in the fracture toughness of the welded metal and the heat-affected zone of the welded joint after the electron-beam welding as compared with the fracture toughness of the steel material (base metal), and having the fracture toughness appropriately balanced between each of the portions of the welded joint.

The electron-beam welding can be applied under a low-degree vacuum state that simplified equipment can create, for example, under a reduced pressure of 10 Pa or less. Depending on the ability of equipment, the lower limit of the degree of vacuum is set preferably to $10^{-2}$ Pa. Welding conditions are determined according to ability of devices or thickness of steel materials within ranges in which the accelerating voltage falls in 130 V to 180 V, the beam current falls in 100 mA to 130 mA, and the welding speed falls in 100 mm/min to 250 mm/min. For example, in the case where the thickness is 80 mm, it is recommended to employ the accelerating voltage of 175V, the beam current of 120 mA, and the welding speed of approximately 125 mm/min.

At the time of application of the electron-beam welding, the insert metal containing Ni is inserted between the groove faces of the weld target portion. It may be possible to use, as the insert metal containing Ni, an Ni-based alloy foil, an Ni-Fe alloy foil, and a pure Ni foil.

By using the Ni foil, it is possible to simply calculate the thickness of the insert metal necessary for obtaining the targeted amount of Ni on the basis of the amount of Ni in the steel material, the targeted amount ofNi in the welded metal, the size of the steel material, and the width of the welded metal. The pure Ni foil may be obtained from a foil having the necessary thickness, or may be obtained by laminating plural thin foils so as to obtain the necessary thickness.

For example, in the case where a welded joint having a welded metal with the amount of Ni of 2% is obtained using a steel material (base metal) with the amount of Ni of 0%, the width of the welded metal after electron-beam welding is first examined through a preliminary experiment or other manner. Then, if the width of the welded metal is found to be 4.0 mm, it is possible to obtain an electron-beam welded joint having the welded metal with the amount of Ni of approximately 2%, by applying the electron-beam welding while inserting the Ni foil with a thickness of 0.08 mm.

Next, a description will be made of a method of manufacturing the steel material according to this embodiment of the present invention. With the method according to this embodiment of the present invention, it is possible to limit the number of the coarsened oxide grains to 20 pieces/mm$^2$ or less, by cooling, for example, at a rate of 9 °C/min or more in a casting process for casting a slab (steel piece) or other steel materials. At the same time, it is possible to obtain the number of the small oxide grains containing Mg of $1 \times 10^3$ or more.

From the industrial viewpoint, the continuous casting is preferable for the method of manufacturing the steel material (steel piece). With the continuous casting, it is possible to increase the cooling rate after casting to reduce the size of the oxide and Ti nitrides. Thus, from the viewpoint of improving toughness, the continuous casting is preferable.

A method of increasing the cooling rate for the cast piece to 9 °C/min or more in the continuous casting includes, for example, increasing pressure and the volume of water in a cooling area in the continuous casting device, reducing the thickness of casting mold, and pressing down a non-coagulated layer of a cast-piece to reduce the thickness of a slab. In general, with these methods, the upper limit of the cooling rate for the cast piece is approximately 30 °C/min.

In general, the high-Mn steel has poor hot-working property as compared with a carbon steel and low-alloy steel, and hence, it is necessary to apply a thermomechanical treatment under appropriate conditions. In the method according to the present invention, the steel material (steel piece) having the components described above and subjected to casting is heated to a temperature in the range of 950°C to 1150°C. In the case where heating temperature is less than 950°C, deformation resistance during hot rolling increases, and productivity deteriorates. On the other hand, in the case where the temperature exceeds 1150°C, Ti nitrides in the steel material (steel piece) coarsen, which possibly leads to a reduction in toughness of the steel material (base metal) and the heat-affected zone.

To obtain the required strength and toughness of the steel material after the steel material (steel piece) is heated to a temperature in the range of 950°C to 1150°C, a thermomechanical treatment (thermo-mechanical controlled processing: TMCP) is applied. The thermomechanical treatment is effective in enhancing the-strength and toughness of the steel material, and includes, for example, (1) controlled rolling (CR), (2) controlled rolling - accelerated cooling (ACC), and (3) direct quenching after rolling - tempering process (direct quenching and tempering: DQT). In the present invention, (2) controlled rolling - accelerated cooling and (3) direct hardening after rolling-tempering process are preferable from the viewpoint of improving the fracture toughness.

When applied in a non-recrystallized temperature range (approximately 900°C or less), the controlled rolling is effective in reducing the size of the structure of the steel material and improving the strength and toughness. In the present invention, it is preferable to finish the controlled rolling at a temperature more than or equal to Ar$_3$ transformation point to prevent generation of deformed ferrite.

In particular, in the case where the controlled rolling is applied and then the accelerated cooling is performed, a hardened phase such as bainite and martensite is generated, which leads to improvement in the strength. In order to secure the strength and the toughness, it is preferable to set a temperature at the time of stop of the accelerated cooling to be in the range of 400°C to 600°C. The direct quenching after rolling is a method including performing hot rolling in a temperature range higher than that for the controlled rolling, and then performing water cooling to apply quenching. With this method, the strength generally increases, and hence, tempering is applied to secure the toughness. It is preferable to set the tempering temperature to be in the range of 400°C to 650°C.

Examples

Next, Examples according to the present invention will be described. Conditions for Examples are merely examples of conditions used for checking applicability and effects of the present invention, and conditions for the present invention are not limited to these examples of conditions. Further, various conditions may be employed in the present invention within the scope of the present invention, provided that the objects of the present invention can be achieved.

[Examples]

Steel materials were manufactured using steel materials containing the components shown in Table 1 and Table 2 under conditions shown in Table 3 and Table 4. Test pieces were taken from the steel materials, were subjected to tensile tests and CTOD tests, and were measured for the tensile strength and the fracture toughness of the steel material (base metal). The strength of the steel material (base metal) was measured on the basis of JIS Z 2241, by taking test pieces from a thickness 1/2 portion with a rolling direction being in the longitudinal direction. Note that test pieces having the yield strength that fell in the range of 355 MPa to 420 MPa were evaluated as a favorable result.

An electron-beam welding was applied to the steel materials to form I-groove butt-welded joints. An RPEBW method was employed for the electron-beam welding in a manner such that a pure Ni foil was used as the insert metal, and the welding was performed under a vacuum state with approximately 1 mbar, voltage of 175 V, electric current of 120 mA, and welding speed of approximately 125 mm/min. The width of welding bead was in the range of 3.0 mm to 5.5 mm. Test samples were taken out from the welded metal, and components of the test samples were analyzed. The results of the analysis are shown in Table 5 and Table 6.

Further, from the welded joint, (a) six test pieces having a size of t (thickness) $\times$ 2t were taken in the case where the thickness is less than 60 mm, whereas (b) six test pieces having a size of t (thickness) $\times$ t were taken in the case where the thickness is 60 mm or more. A 50% fatigue crack was applied to the test pieces as a notch to the central portion of the welded metal (WM), the melted portion (FL) and the steel material (base metal, BM). FIG. 6 shows a test piece having a notch applied thereto.

CTOD tests were performed at a test temperature of 0°C to obtain a fracture toughness value $\delta c$. The lowest value of the fracture toughness values $\delta c$ of the six test pieces at the notch positions were denoted by fracture toughness values $\delta_{WM}$, $\delta_{HAZ}$, and $\delta_{BM}$, respectively. Note that, since the width of the heat-affected zone of the electron-beam welded joint is narrow, the CTOD value $\delta_{HAZ}$ of the heat-affected zone was measured by using test pieces having a notch applied to the melted portion. For the test piece having the CTOD value of 1.0 mm or more, ductile failure was determined to occur, and the above-described calculation was made on the assumption that the CTOD value was 1.0 mm.

Table 7 and Table 8 show $\delta_{BM}/\delta_{WM}$ and $\delta_{HAZ}/\delta_{WM}$ based on the CTOD value $\delta_{WM}$ of the welded metal (WM), the CTOD value $\delta_{HAZ}$ of the heat-affected zone (HAZ), and the CTOD value $\delta_{BM}$ of the steel material (base metal, BM) of the welded joint.

The number of oxide grains in the steel material was measured through the following method. Test pieces taken from the center portion in cross-section along the thickness direction of the steel sheet were manufactured from each of the steel materials, oxide grains (all coarsened oxide grain) having the equivalent circle diameter of 1.0 $\mu$m or more were observed with a field-emission scanning electron microscope (FE-SEM), and the size of and the number of the grains were measured. For the oxide grains containing Mg and having the equivalent circle diameter of 0.05 $\mu$m or more and less than 0.5 $\mu$m (small oxide grains containing Mg), test pieces were taken from the center portion in the thickness direction of the steel material, and were subjected to electro polishing through selective potentiostatic etching by electrolytic dissolution (SPEED method). Then, from the test pieces, extraction-replica films were created, and were observed with a field-emission transmission electron microscope (FE-TEM) with a magnification in the range of 10000 to 1000000 power. With an energy dispersive x-ray spectrometry (EDX method), inclusion grains having a weight ratio of Mg of 7% or more obtained from characteristic X-rays were determined to be inclusion grains containing Ti. On the basis of the results described above, the size of and the number of the inclusion grains containing Ti were measured. At the center portion in the thickness direction of each of the test pieces, 20 or more views were observed, and the average value of the number of inclusion grains (the small oxide grains containing Mg and the coarsened inclusion grain) per unit area was calculated.

[Table 1]

Blank columns indicate that no alloying element was intentionally added.

[Table 2]

Underlines were applied to indicate that underlined values fall outside the range according to the present invention, or outside the favorable range. Blank columns indicate that no alloying element was intentionally added.

In the following Table 3, Table 4, Table 7 and Table 8, words written in the columns of the thermomechanical treatment indicate the following:

CR: controlled rolling (rolling at temperatures suitable for enhancing the strength and toughness)
ACC: accelerated cooling (water cooling to the temperature range of 400°C to 600°C after controlled rolling)
DQT: quenching-tempering process applied immediately after rolling

In the case where the toughness value (CTOD value) was 1.0 mm or more, the ductile failure was considered to occur in the steel material, and calculation was made on the assumption that the toughness value was 1.0 mm.

[Table 3]

[Table 4]

Underlines were applied to indicate that the underlined steel materials are samples according to Conventional Example, or underlined values fall outside the favorable range.

[Table 5]

[Table 6]

Underlines were applied to indicate that the underlined steel materials are samples according to Comparative Example, or underlined values fall outside the range according to the present invention, or outside the favorable range. Blank columns indicate that an alloying element corresponding to the column was not intentionally added.

[Table 7]

Underlines were applied to indicate that the underlined values fall outside the range according to the present invention, or outside the favorable range.

[Table 8]

Underlines were applied to indicate that the underlined steel materials are samples according to Comparative Example, or underlines values fall outside the favorable range.

As can be understood from Table 1, Table 5, and Table 7, for the joints No. 1 to No. 31 according to the present invention, all of the components of the steel material (base metal) and the welded metal, the CeEBB and the C/CeEBB fall in the range according to the present invention. Further, the ratio of the fracture toughness value $\delta c$ of the steel material (BM), the heat-affected zone (HAZ) and the welded metal (WM), the $\delta_{BM}/\delta_{WM}$, and the $\delta_{HAZ}/\delta_{WM}$ exhibit sufficient values.

On the other hand, as can be understood from Table 2, Table 6, and Table 8, the joint No. 32 of Comparative Example has a reduced amount of C and increased amount of Mn, which results in an increase in the CeEBB, a reduction in the CTOD value $\delta_{HAZ}$ of the heat-affected zone (HAZ), and insufficient $\delta_{HAZ}/\delta_{WM}$.

The joint No. 33 (Comparative Example) has an increased amount of C, which results in a reduction in the CTOD value $\delta_{HAZ}$ of the heat-affected zone (HAZ), and insufficient $\delta_{HAZ}/\delta_{WM}$.

The joint No. 35 (Comparative Example) is formed by the steel material having reduced amount of Mn and reduce CeEBB, which results in a reduction in the strength of the steel material (base metal), a reduction in the CTOD value ($\delta$WM) of the welded metal (WM), and an increase in the the $\delta_{BM}/\delta_{WM}$ and the $\delta_{HAZ}/\delta_{WM}$.

The joint No. 34 (Comparative Example) has an increased amount of Si, and the brittle phase appears in the heat-affected zone (HAZ). Further, the CTOD value $\delta_{HAZ}$ of the HAZ is lower, and the $\delta_{HAZ}/\delta_{WM}$ is insufficient. The joint No. 36 (Comparative Example) is formed by the steel material having an increased amount of Mn, and increased value of the CeEBB, which results in a reduction in the CTOD value $\delta_{HAZ}$ of the heat-affected zone (HAZ), and insufficient $\delta_{HAZ}/\delta_{WM}$.

The joints No. 37 and 38 (Comparative Example) have an increased amount of P and increased amount of S, which results in a reduction in the CTOD value $\delta_{HAZ}$ of the heat-affected zone (HAZ), and insufficient $\delta_{HAZ}/\delta_{WM}$. The joints No. 39 and 40 (Comparative Example) have an increased amount ofNb and increased amount of V, which results in a reduction in the CTOD value $\delta_{HAZ}$ of the heat-affected zone (HAZ), and insufficient $\delta_{HAZ}/\delta_{WM}$.

The joint No. 41 (Comparative Example) has an increased amount of Ti, the joint No. 42 (Comparative Example) has an increased amount of Al, and the joint No. 43 (Comparative Example) has an increased amount of N. Thus, due to the oxide or nitrides, the CTOD value $\delta_{HAZ}$ of the heat-affected zone (HAZ) reduces, and the $\delta_{HAZ}/\delta_{WM}$ is insufficient.

The joint No. 44 (Comparative Example) is formed by the steel material having reduced amount of O, and the joint No. 45 (Comparative Example) is formed by the steel material having an increased amount of O, which results in a reduction in the CTOD value $\delta_{HAZ}$ of the heat-affected zone (HAZ), and insufficient $\delta_{HAZ}/\delta_{WM}$. The joints No. 46 to 50 (Comparative Example) are example joints having inappropriate amounts of Mg and Ca, which results in a reduction in the CTOD value $\delta_{HAZ}$ of the heat-affected zone (HAZ), and insufficient $\delta_{HAZ}/\delta_{WM}$.

The joint No. 51 (Comparative Example) is formed by the steel material having reduced value of CeEBB, which results in a reduction in the strength of the steel material (base metal). The joint No. 52 (Comparative Example) is formed by the steel sheet having an increased value of CeEBB, which results in a reduction in the CTOD value $\delta_{HAZ}$ of the heat-affected zone (HAZ), and insufficient $\delta_{HAZ}/\delta_{WM}$. The joint No. 53 (Comparative Example) is formed by the steel sheet having an increased value of C/CeEBB, which results in a reduction in the CTOD value $\delta_{HAZ}$ of the heat-affected zone (HAZ), and insufficient $\delta_{HAZ}/\delta_{WM}$.

The joint No. 54 (Comparative Example) has a reduced amount of Ni added to the welded metal (WM), and the joint No. 56 (Comparative Example) has a reduced value of the CeEBW of the welded metal (WM), which results in a reduction in the CTOD value $\delta_{WM}$ of the WM, and increase in the $\delta_{BM}/\delta_{WM}$.

The joint No. 55 (Comparative Example) has an increased amount of Ni added to the welded metal (WM), and the joint No. 57 (Comparative Example) has an increased value of CeEBW of the welded metal (WM), which results in a reduction in the CTOD value $\delta_{HAZ}$ of the heat-affected zone (HAZ), and insufficient $\delta_{HAZ}/\delta_{WM}$.

Industrial Applicability

According to the present invention, it is possible to reduce the deterioration in the fracture toughness of the welded metal and the heat-affected zone of the electron-beam welded joint formed by the steel material with a yield strength of 355 MPa class, as compared with the fracture toughness of the steel material (base metal). This makes it possible to provide the electron-beam welded joint having fracture toughness of each portion thereof appropriately balanced, and the steel material that can be used for forming the welded joint and is suitable for construction of the foundation portion of the tower of a wind power generator at sea with reduced cost. Thus, the present invention has high industrial applicability in the field of large-scale steel structure construction.

Table 1

| Steel material No. | Chemical components (mass%) | | | | | | | | | | | | | | | | | | | CeEBB (%) | C/CeEBB | Remarks |
|---|---|---|---|---|---|---|---|---|---|---|---|---|---|---|---|---|---|---|---|---|---|---|
| | C | Si | Mn | P | S | Ti | Al | N | Mg | Ca | Mg+Ca | O | Nb | V | Cu | Ni | B | Cr | Mo | | | |
| 1 * | 0.050 | 0.13 | 1.60 | 0.005 | 0.003 | 0.012 | 0.002 | 0.0033 | 0.0014 | 0.0011 | 0.0025 | 0.0021 | | | | 0.21 | | | | 0.46 | 0.11 | |
| 2 | 0.032 | 0.09 | 2.31 | 0.004 | 0.010 | 0.010 | 0.009 | 0.0035 | 0.0013 | 0.0014 | 0.0027 | 0.0030 | 0.003 | | 0.16 | 0.29 | | | | 0.64 | 0.05 | |
| 3 | 0.029 | 0.08 | 2.41 | 0.007 | 0.002 | 0.006 | 0.006 | 0.0037 | 0.0008 | 0.0010 | 0.0018 | 0.0026 | | 0.022 | | | | | | 0.64 | 0.05 | |
| 4 | 0.031 | 0.07 | 2.11 | 0.006 | 0.004 | 0.011 | 0.004 | 0.0039 | 0.0011 | 0.0013 | 0.0024 | 0.0019 | 0.019 | | | | | | | 0.56 | 0.06 | |
| 5 | 0.034 | 0.11 | 2.25 | 0.015 | 0.005 | 0.010 | 0.012 | 0.0041 | 0.0012 | 0.0009 | 0.0021 | 0.0035 | 0.001 | | | 0.36 | | | | 0.62 | 0.05 | |
| 6 | 0.037 | 0.25 | 2.25 | 0.007 | 0.003 | 0.010 | 0.012 | 0.0043 | 0.0013 | 0.0009 | 0.0022 | 0.0034 | | | 0.22 | | | | | 0.61 | 0.06 | |
| 7 | 0.037 | 0.10 | 2.16 | 0.006 | 0.006 | 0.012 | 0.012 | 0.0039 | 0.0011 | 0.0012 | 0.0023 | 0.0019 | 0.011 | | | | | | | 0.58 | 0.06 | |
| 8 | 0.038 | 0.13 | 2.31 | 0.010 | 0.002 | 0.009 | 0.012 | 0.0059 | 0.0012 | 0.0009 | 0.0021 | 0.0018 | 0.002 | 0.024 | | | | | | 0.62 | 0.06 | |
| 9 | 0.040 | 0.10 | 2.06 | 0.006 | 0.008 | 0.015 | 0.003 | 0.0042 | 0.0011 | 0.0007 | 0.0018 | 0.0029 | | | 0.14 | 0.49 | | | | 0.60 | 0.07 | |
| 10 | 0.043 | 0.13 | 2.16 | 0.005 | 0.006 | 0.012 | 0.008 | 0.0039 | 0.0011 | 0.0009 | 0.0020 | 0.0017 | 0.008 | | | | | | | 0.58 | 0.07 | |
| 11 | 0.043 | 0.11 | 2.03 | 0.009 | 0.003 | 0.011 | 0.002 | 0.0034 | 0.0010 | 0.0008 | 0.0018 | 0.0033 | | | | | | | | 0.55 | 0.08 | |
| 12 | 0.046 | 0.10 | 1.89 | 0.008 | 0.002 | 0.014 | 0.009 | 0.0036 | 0.0010 | 0.0008 | 0.0018 | 0.0020 | 0.010 | | | | | 0.49 | | 0.62 | 0.07 | |
| 13 | 0.044 | 0.08 | 2.23 | 0.005 | 0.001 | 0.008 | 0.003 | 0.0021 | 0.0013 | 0.0003 | 0.0016 | 0.0034 | | 0.021 | | | | | | 0.61 | 0.07 | |
| 14 | 0.047 | 0.12 | 1.97 | 0.006 | 0.002 | 0.010 | 0.008 | 0.0030 | 0.0014 | 0.0008 | 0.0022 | 0.0026 | 0.010 | | | | | | | 0.54 | 0.09 | |
| 15 | 0.049 | 0.11 | 2.06 | 0.004 | 0.002 | 0.011 | 0.002 | 0.0036 | 0.0015 | 0.0012 | 0.0027 | 0.0020 | | | | | | | | 0.56 | 0.09 | |
| 16 | 0.048 | 0.09 | 2.21 | 0.005 | 0.001 | 0.009 | 0.009 | 0.0032 | 0.0013 | 0.0016 | 0.0029 | 0.0018 | 0.006 | | | | | | | 0.60 | 0.08 | |
| 17 | 0.047 | 0.11 | 2.10 | 0.004 | 0.003 | 0.012 | 0.006 | 0.0040 | 0.0013 | 0.0013 | 0.0026 | 0.0026 | 0.001 | | | 0.46 | | | | 0.60 | 0.08 | |
| 18 | 0.051 | 0.12 | 2.16 | 0.011 | 0.001 | 0.010 | 0.004 | 0.0041 | 0.0004 | 0.0024 | 0.0028 | 0.0023 | 0.002 | | 0.22 | 0.21 | | | | 0.62 | 0.08 | |
| 19 | 0.049 | 0.14 | 1.84 | 0.006 | 0.004 | 0.012 | 0.012 | 0.0037 | 0.0021 | 0.0008 | 0.0029 | 0.0018 | | | | | | 0.50 | | 0.61 | 0.08 | |
| 20 | 0.052 | 0.12 | 1.82 | 0.007 | 0.002 | 0.010 | 0.012 | 0.0037 | 0.0003 | 0.0026 | 0.0029 | 0.0020 | | | | | | | 0.50 | 0.61 | 0.09 | |
| 21 | 0.050 | 0.12 | 2.29 | 0.005 | 0.003 | 0.011 | 0.003 | 0.0035 | 0.0004 | 0.0024 | 0.0028 | 0.0016 | | | | | | | | 0.62 | 0.08 | |
| 22 | 0.056 | 0.13 | 1.80 | 0.006 | 0.009 | 0.011 | 0.008 | 0.0031 | 0.0023 | 0.0005 | 0.0028 | 0.0022 | 0.004 | 0.020 | | | | | 0.49 | 0.61 | 0.09 | |
| 23 | 0.059 | 0.11 | 1.95 | 0.007 | 0.003 | 0.008 | 0.002 | 0.0034 | 0.0003 | 0.0026 | 0.0029 | 0.0025 | 0.003 | 0.016 | | | | | | 0.55 | 0.11 | |
| 24 | 0.057 | 0.15 | 1.76 | 0.008 | 0.002 | 0.010 | 0.009 | 0.0041 | 0.0011 | 0.0009 | 0.0020 | 0.0010 | 0.010 | | 0.21 | 0.22 | | | | 0.53 | 0.11 | |
| 25 | 0.058 | 0.13 | 1.83 | 0.005 | 0.003 | 0.009 | 0.006 | 0.0045 | 0.0014 | 0.0010 | 0.0024 | 0.0012 | 0.009 | | 0.09 | 0.47 | | | | 0.55 | 0.10 | |
| 26 | 0.061 | 0.16 | 2.06 | 0.004 | 0.004 | 0.010 | 0.004 | 0.0039 | 0.0010 | 0.0008 | 0.0018 | 0.0013 | | | 0.15 | 0.26 | | | | 0.60 | 0.10 | |
| 27 | 0.074 | 0.05 | 2.16 | 0.005 | 0.002 | 0.011 | 0.012 | 0.0057 | 0.0008 | 0.0009 | 0.0017 | 0.0022 | | | | | | | | 0.61 | 0.12 | |
| 28 | 0.083 | 0.12 | 1.81 | 0.006 | 0.003 | 0.010 | 0.009 | 0.0042 | 0.0016 | 0.0006 | 0.0022 | 0.0021 | | | 0.11 | 0.31 | | | | 0.56 | 0.15 | |
| 29 | 0.082 | 0.09 | 1.93 | 0.005 | 0.001 | 0.012 | 0.006 | 0.0037 | 0.0014 | 0.0009 | 0.0023 | 0.0022 | 0.008 | | | | | | | 0.56 | 0.15 | |
| 30* | 0.097 | 0.06 | 1.54 | 0.006 | 0.003 | 0.010 | 0.004 | 0.0043 | 0.0015 | 0.0013 | 0.0028 | 0.0023 | | | | | | 0.42 | 0.44 | 0.65 | 0.15 | |
| 31 | 0.054 | 0.09 | 1.78 | 0.005 | 0.002 | 0.010 | 0.006 | 0.0031 | 0.0016 | 0.0006 | 0.0022 | 0.0019 | 0.010 | | 0.12 | | 0.0018 | | | 0.51 | 0.11 | |

* not according to the scope of the invention

Example according to present invention

Table 2

| Steel material No. | Chemical components (mass%) | | | | | | | | | | | | | | | | | | | CeEBB (%) | C/CeEBB | Remarks |
|---|---|---|---|---|---|---|---|---|---|---|---|---|---|---|---|---|---|---|---|---|---|---|
| | C | Si | Mn | P | S | Ti | Al | N | Mg | Ca | Mg+Ca | O | Nb | V | Cu | Ni | B | Cr | Mo | | | |
| 32 | 0.017 | 0.13 | 2.63 | 0.010 | 0.005 | 0.011 | 0.011 | 0.0030 | 0.0012 | 0.0008 | 0.0020 | 0.0032 | | | | | | | | 0.67 | 0.03 | Comparative Example |
| 33 | 0.118 | 0.12 | 1.90 | 0.009 | 0.003 | 0.012 | 0.003 | 0.0039 | 0.0025 | 0.0006 | 0.0031 | 0.0023 | 0.016 | | | | | | | 0.59 | 0.20 | |
| 34 | 0.076 | 0.36 | 1.93 | 0.006 | 0.004 | 0.009 | 0.012 | 0.0031 | 0.0017 | 0.0016 | 0.0033 | 0.0026 | 0.012 | 0.021 | | | | | | 0.56 | 0.14 | |
| 35 | 0.020 | 0.18 | 1.46 | 0.008 | 0.005 | 0.014 | 0.003 | 0.0035 | 0.0016 | 0.0015 | 0.0031 | 0.0010 | 0.019 | 0.019 | | | | 0.07 | 0.06 | 0.41 | 0.05 | |
| 36 | 0.032 | 0.10 | 2.63 | 0.007 | 0.001 | 0.010 | 0.008 | 0.0034 | 0.0015 | 0.0017 | 0.0032 | 0.0025 | | | | | | | | 0.69 | 0.05 | |
| 37 | 0.049 | 0.07 | 1.92 | 0.017 | 0.004 | 0.009 | 0.002 | 0.0039 | 0.0012 | 0.0009 | 0.0021 | 0.0017 | 0.011 | | | | | | | 0.53 | 0.09 | |
| 38 | 0.036 | 0.14 | 1.76 | 0.009 | 0.011 | 0.011 | 0.009 | 0.0030 | 0.0012 | 0.0008 | 0.0020 | 0.0025 | 0.009 | | 0.20 | 0.48 | | | | 0.52 | 0.07 | |
| 39 | 0.083 | 0.10 | 2.09 | 0.005 | 0.001 | 0.012 | 0.006 | 0.0037 | 0.0016 | 0.0015 | 0.0031 | 0.0024 | 0.024 | | | | | | | 0.61 | 0.14 | |
| 40 | 0.084 | 0.09 | 1.78 | 0.008 | 0.006 | 0.009 | 0.004 | 0.0036 | 0.0010 | 0.0009 | 0.0019 | 0.0020 | 0.010 | 0.033 | 0.13 | | | | | 0.54 | 0.15 | |
| 41 | 0.074 | 0.10 | 2.02 | 0.004 | 0.002 | 0.017 | 0.004 | 0.0031 | 0.0010 | 0.0010 | 0.0020 | 0.0023 | | | | | | | | 0.58 | 0.13 | |
| 42 | 0.041 | 0.16 | 1.81 | 0.005 | 0.003 | 0.009 | 0.018 | 0.0039 | 0.0009 | 0.0008 | 0.0017 | 0.0031 | 0.019 | 0.026 | 0.12 | 0.21 | | | | 0.52 | 0.08 | |
| 43 | 0.082 | 0.10 | 2.11 | 0.006 | 0.002 | 0.010 | 0.008 | 0.0064 | 0.0012 | 0.0010 | 0.0022 | 0.0026 | 0.017 | 0.025 | | | | | | 0.61 | 0.13 | |
| 44 | 0.081 | 0.09 | 2.09 | 0.004 | 0.006 | 0.009 | 0.006 | 0.0034 | 0.0016 | 0.0013 | 0.0029 | 0.0004 | 0.019 | | | 0.31 | | | | 0.62 | 0.13 | |
| 45 | 0.036 | 0.12 | 2.14 | 0.007 | 0.005 | 0.010 | 0.002 | 0.0039 | 0.0012 | 0.0010 | 0.0022 | 0.0050 | 0.002 | 0.030 | | | | | | 0.58 | 0.06 | |
| 46 | 0.055 | 0.05 | 2.13 | 0.005 | 0.002 | 0.010 | 0.009 | 0.0036 | 0.0002 | 0.0020 | 0.0022 | 0.0020 | | | | | | | | 0.53 | 0.10 | |
| 47 | 0.054 | 0.09 | 2.12 | 0.006 | 0.002 | 0.013 | 0.007 | 0.0038 | 0.0019 | 0.0002 | 0.0021 | 0.0021 | | | | | | | | 0.53 | 0.10 | |
| 48 | 0.053 | 0.09 | 2.14 | 0.005 | 0.004 | 0.011 | 0.006 | 0.0034 | 0.0029 | 0.0008 | 0.0037 | 0.0018 | | | | | | | | 0.53 | 0.10 | |
| 49 | 0.055 | 0.12 | 2.13 | 0.005 | 0.003 | 0.012 | 0.008 | 0.0033 | 0.0008 | 0.0028 | 0.0036 | 0.0022 | | | | | | | | 0.53 | 0.10 | |
| 50 | 0.056 | 0.11 | 2.11 | 0.006 | 0.002 | 0.010 | 0.006 | 0.0033 | 0.0023 | 0.0020 | 0.0043 | 0.0021 | | | | | | | | 0.53 | 0.11 | |
| 51 | 0.022 | 0.12 | 1.52 | 0.005 | 0.004 | 0.011 | 0.003 | 0.0034 | 0.0018 | 0.0014 | 0.0032 | 0.0024 | | | | 0.11 | | | | 0.41 | 0.05 | |
| 52 | 0.031 | 0.05 | 2.48 | 0.006 | 0.003 | 0.008 | 0.005 | 0.0033 | 0.0019 | 0.0015 | 0.0034 | 0.0025 | | 0.021 | | | | | | 0.66 | 0.05 | |
| 53 | 0.098 | 0.05 | 1.97 | 0.005 | 0.004 | 0.012 | 0.005 | 0.0036 | 0.0016 | 0.0014 | 0.0030 | 0.0022 | | | 0.11 | 0.03 | | | | 0.60 | 0.16 | |

Table 3

| Steel material No. | Manufacturing conditions | | | | Remarkds |
|---|---|---|---|---|---|
| | Cooling rate for cast piece (°C/min) | Heating temperature for steel piece (°C) | Thermomechanical treatment | Plate thickness (mm) | |
| 1 * | 11 | 1050 | ACC | 50 | Example according to present invention |
| 2 | 12 | 1050 | ACC | 60 | |
| 3 | 9 | 1100 | ACC | 65 | |
| 4 | 16 | 1050 | ACC | 60 | |
| 5 | 12 | 1050 | ACC | 60 | |
| 6 | 11 | 1050 | ACC | 80 | |
| 7 | 13 | 1100 | ACC | 50 | |
| 8 | 14 | 1050 | ACC | 60 | |
| 9 | 16 | 1100 | CR | 55 | |
| 10 | 10 | 1100 | ACC | 60 | |
| 11 | 12 | 950 | ACC | 65 | |
| 12 | 9 | 1050 | ACC | 65 | |
| 13 | 14 | 1050 | CR | 90 | |
| 14 | 11 | 1100 | ACC | 80 | |
| 15 | 16 | 1050 | ACC | 75 | |
| 16 | 12 | 1050 | ACC | 55 | |
| 17 | 9 | 1000 | DOT | 100 | |
| 18 | 10 | 1050 | ACC | 65 | |
| 19 | 9 | 1050 | CR | 50 | |
| 20 | 13 | 1100 | DQT | 130 | |
| 21 | 12 | 1050 | ACC | 60 | |
| 22 | 9 | 1050 | ACC | 70 | |
| 23 | 15 | 1000 | ACC | 90 | |
| 24 | 10 | 1050 | DQT | 120 | |
| 25 | 9 | 950 | ACC | 50 | |
| 26 | 16 | 1100 | ACC | 80 | |
| 27 | 11 | 1150 | ACC | 100 | |
| 28 | 12 | 1100 | ACC | 75 | |
| 29 | 16 | 1150 | ACC | 80 | |
| 30* | 9 | 1100 | DQT | 150 | |
| 31 | 12 | 1100 | ACC | 75 | |
| * not according to the scope of the invention | | | | | |

Table 4

| Steel material No. | Manufacturing conditions | | | | Remarkds |
|---|---|---|---|---|---|
| | Cooling rate for cast piece (°C/min) | Heating temperature for steel piece (°C) | Thermomechanical treatment | Plate thickness (mm) | |
| 32 | 9 | 1050 | CR | 50 | Comparative example |
| 33 | 11 | 1100 | DQT | 120 | |
| 34 | 14 | 1150 | ACC | 60 | |
| 35 | 16 | 1100 | ACC | 60 | |
| 36 | 10 | 1050 | ACC | 80 | |
| 37 | 13 | 1100 | CR | 50 | |
| 38 | 9 | 1100 | ACC | 55 | |
| 39 | 10 | 1150 | ACC | 80 | |
| 40 | 12 | 1100 | ACC | 90 | |
| 41 | 16 | 1100 | CR | 50 | |
| 42 | 11 | 1100 | ACC | 55 | |
| 43 | 9 | 1150 | ACC | 100 | |
| 44 | 10 | 1100 | ACC | 60 | |
| 45 | 12 | 1100 | ACC | 55 | |
| 46 | 12 | 1050 | ACC | 50 | |
| 47 | 10 | 1050 | ACC | 50 | |
| 48 | 10 | 1050 | ACC | 50 | |
| 49 | 12 | 1050 | ACC | 50 | |
| 50 | 11 | 1050 | ACC | 50 | |
| 51 | 9 | 1050 | ACC | 50 | |
| 52 | 11 | 1100 | ACC | 65 | |
| 53 | 9 | 1150 | ACC | 80 | |

Table 5

| Joint No. | Steel material No. | Chemical components (mass%) | | | | | | | | | | | | | | | | | | | CeEBW (%) | Remarks |
|---|---|---|---|---|---|---|---|---|---|---|---|---|---|---|---|---|---|---|---|---|---|---|
| | | C | Si | Mn | P | S | Ti | Al | N | Mg | Ca | Mg+Ca | O | Nb | V | Cu | Ni | B | Cr | Mo | | |
| 1 * | 1 * | 0.050 | 0.13 | 1.52 | 0.005 | 0.003 | 0.011 | 0.002 | 0.0033 | 0.0014 | 0.0011 | 0.0025 | 0.0017 | | | | 2.30 | | | | 0.58 | Example according to present invention |
| 2 | 2 | 0.032 | 0.09 | 1.85 | 0.004 | 0.010 | 0.010 | 0.009 | 0.0035 | 0.0013 | 0.0014 | 0.0027 | 0.0018 | 0.003 | | 0.16 | 2.10 | | | | 0.64 | |
| 3 | 3 | 0.029 | 0.08 | 1.93 | 0.007 | 0.002 | 0.006 | 0.006 | 0.0037 | 0.0008 | 0.0010 | 0.0018 | 0.0018 | | 0.022 | | 1.98 | | | | 0.65 | |
| 4 | 4 | 0.031 | 0.07 | 1.79 | 0.006 | 0.004 | 0.010 | 0.004 | 0.0039 | 0.0011 | 0.0013 | 0.0024 | 0.0015 | 0.019 | | | 1.89 | | | | 0.61 | |
| 5 | 5 | 0.034 | 0.11 | 1.80 | 0.015 | 0.005 | 0.010 | 0.011 | 0.0041 | 0.0012 | 0.0009 | 0.0021 | 0.0016 | 0.001 | | | 1.96 | | | | 0.61 | |
| 6 | 6 | 0.037 | 0.25 | 1.80 | 0.007 | 0.003 | 0.010 | 0.011 | 0.0043 | 0.0013 | 0.0009 | 0.0022 | 0.0017 | | | 0.22 | 2.00 | | | | 0.64 | |
| 7 | 7 | 0.037 | 0.10 | 1.84 | 0.006 | 0.006 | 0.011 | 0.011 | 0.0039 | 0.0011 | 0.0012 | 0.0023 | 0.0015 | 0.011 | | | 1.94 | | | | 0.63 | |
| 8 | 8 | 0.038 | 0.13 | 1.85 | 0.010 | 0.002 | 0.009 | 0.011 | 0.0059 | 0.0012 | 0.0009 | 0.0021 | 0.0014 | 0.002 | 0.024 | | 1.93 | | | | 0.63 | |
| 9 | 9 | 0.040 | 0.10 | 1.75 | 0.006 | 0.008 | 0.014 | 0.003 | 0.0042 | 0.0011 | 0.0007 | 0.0018 | 0.0017 | | | 0.14 | 2.05 | | | | 0.62 | |
| 10 | 10 | 0.043 | 0.13 | 1.84 | 0.005 | 0.006 | 0.011 | 0.008 | 0.0039 | 0.0011 | 0.0009 | 0.0020 | 0.0014 | 0.008 | | | 2.10 | | | | 0.64 | |
| 11 | 11 | 0.043 | 0.11 | 1.73 | 0.009 | 0.003 | 0.010 | 0.002 | 0.0034 | 0.0010 | 0.0008 | 0.0018 | 0.0020 | | | | 2.06 | | | | 0.61 | |
| 12 | 12 | 0.046 | 0.10 | 1.70 | 0.008 | 0.002 | 0.013 | 0.009 | 0.0036 | 0.0010 | 0.0008 | 0.0018 | 0.0016 | 0.010 | | | 1.89 | | 0.49 | | 0.70 | |
| 13 | 13 | 0.044 | 0.08 | 1.90 | 0.005 | 0.001 | 0.008 | 0.003 | 0.0021 | 0.0013 | 0.0003 | 0.0016 | 0.0019 | | 0.021 | | 1.97 | | | | 0.65 | |
| 14 | 14 | 0.047 | 0.12 | 1.77 | 0.006 | 0.002 | 0.010 | 0.008 | 0.0030 | 0.0014 | 0.0008 | 0.0022 | 0.0018 | 0.010 | | | 1.97 | | | | 0.62 | |
| 15 | 15 | 0.049 | 0.11 | 1.75 | 0.004 | 0.002 | 0.010 | 0.002 | 0.0036 | 0.0015 | 0.0012 | 0.0027 | 0.0016 | | | | 2.21 | | | | 0.63 | |
| 16 | 16 | 0.048 | 0.09 | 1.88 | 0.005 | 0.001 | 0.009 | 0.009 | 0.0032 | 0.0013 | 0.0016 | 0.0029 | 0.0014 | 0.006 | | | 2.23 | | | | 0.67 | |
| 17 | 17 | 0.047 | 0.11 | 1.79 | 0.004 | 0.003 | 0.011 | 0.006 | 0.0040 | 0.0013 | 0.0013 | 0.0026 | 0.0018 | 0.001 | | | 1.21 | | | | 0.57 | |
| 18 | 18 | 0.051 | 0.12 | 1.84 | 0.011 | 0.001 | 0.010 | 0.004 | 0.0041 | 0.0004 | 0.0024 | 0.0028 | 0.0016 | 0.002 | | 0.22 | 1.45 | | | | 0.62 | |
| 19 | 19 | 0.049 | 0.14 | 1.66 | 0.006 | 0.004 | 0.011 | 0.011 | 0.0037 | 0.0021 | 0.0008 | 0.0029 | 0.0014 | | | | 1.96 | | 0.50 | | 0.69 | |
| 20 | 20 | 0.052 | 0.12 | 1.64 | 0.007 | 0.002 | 0.010 | 0.011 | 0.0037 | 0.0003 | 0.0026 | 0.0029 | 0.0016 | | | | 1.79 | | | 0.50 | 0.68 | |
| 21 | 21 | 0.050 | 0.12 | 1.83 | 0.005 | 0.003 | 0.010 | 0.003 | 0.0035 | 0.0004 | 0.0024 | 0.0028 | 0.0013 | | | | 1.12 | | | | 0.58 | |
| 22 | 22 | 0.056 | 0.13 | 1.62 | 0.006 | 0.009 | 0.010 | 0.008 | 0.0031 | 0.0023 | 0.0005 | 0.0028 | 0.0015 | 0.004 | 0.020 | | 2.01 | | 0.49 | | 0.70 | |
| 23 | 23 | 0.059 | 0.11 | 1.76 | 0.007 | 0.003 | 0.008 | 0.002 | 0.0034 | 0.0003 | 0.0026 | 0.0029 | 0.0018 | 0.003 | 0.016 | | 1.98 | | | | 0.63 | |
| 24 | 24 | 0.057 | 0.15 | 1.58 | 0.008 | 0.002 | 0.010 | 0.009 | 0.0041 | 0.0011 | 0.0009 | 0.0020 | 0.0009 | 0.010 | | 0.21 | 2.30 | | | | 0.62 | |
| 25 | 25 | 0.058 | 0.13 | 1.65 | 0.005 | 0.003 | 0.009 | 0.006 | 0.0045 | 0.0014 | 0.0010 | 0.0024 | 0.0011 | 0.009 | | 0.09 | 1.80 | | | | 0.60 | |
| 26 | 26 | 0.061 | 0.16 | 1.75 | 0.004 | 0.004 | 0.010 | 0.004 | 0.0039 | 0.0010 | 0.0008 | 0.0018 | 0.0012 | | | 0.15 | 1.96 | | | | 0.64 | |
| 27 | 27 | 0.074 | 0.05 | 1.84 | 0.005 | 0.002 | 0.010 | 0.011 | 0.0057 | 0.0008 | 0.0009 | 0.0017 | 0.0018 | | | | 1.91 | | | | 0.66 | |
| 28 | 28 | 0.083 | 0.12 | 1.63 | 0.006 | 0.003 | 0.010 | 0.009 | 0.0042 | 0.0016 | 0.0006 | 0.0022 | 0.0017 | | | 0.11 | 1.99 | | | | 0.63 | |
| 29 | 29 | 0.082 | 0.09 | 1.74 | 0.005 | 0.001 | 0.011 | 0.006 | 0.0037 | 0.0014 | 0.0009 | 0.0023 | 0.0018 | 0.008 | | | 1.81 | | | | 0.64 | |
| 30* | 30* | 0.097 | 0.06 | 1.31 | 0.006 | 0.003 | 0.010 | 0.004 | 0.0043 | 0.0015 | 0.0013 | 0.0028 | 0.0016 | | | | 1.86 | | 0.42 | 0.44 | 0.72 | |
| 31 | 31 | 0.054 | 0.09 | 1.78 | 0.005 | 0.002 | 0.010 | 0.006 | 0.0031 | 0.0016 | 0.0006 | 0.0022 | 0.0019 | 0.010 | | 0.12 | 1.95 | 0.0012 | | | 0.64 | |

* not according to the scope of the invention

EP 2 594 657 B1

Table 6

| Joint No. | Steel material No. | Chemical components (mass%) | | | | | | | | | | | | | | | | | | | CeEBW (%) | Remarks |
|---|---|---|---|---|---|---|---|---|---|---|---|---|---|---|---|---|---|---|---|---|---|---|
| | | C | Si | Mn | P | S | Ti | Al | N | Mg | Ca | Mg+Ca | O | Nb | V | Cu | Ni | B | Cr | Mo | | |
| 32 | 32 | 0.017 | 0.13 | 2.10 | 0.010 | 0.005 | 0.010 | 0.010 | 0.0030 | 0.0012 | 0.0008 | 0.0020 | 0.0019 | | | | 2.10 | | | | 0.68 | Comparative Example |
| 33 | 33 | 0.118 | 0.12 | 1.71 | 0.009 | 0.003 | 0.011 | 0.003 | 0.0039 | 0.0025 | 0.0006 | 0.0031 | 0.0016 | 0.016 | | | 1.98 | | | | 0.68 | Comparative Example |
| 34 | 34 | 0.076 | 0.36 | 1.74 | 0.006 | 0.004 | 0.009 | 0.011 | 0.0031 | 0.0017 | 0.0016 | 0.0033 | 0.0018 | 0.012 | 0.021 | | 2.30 | | | | 0.67 | Comparative Example |
| 35 | 35 | 0.020 | 0.18 | 1.39 | 0.008 | 0.005 | 0.013 | 0.003 | 0.0035 | 0.0016 | 0.0015 | 0.0031 | 0.0009 | 0.019 | 0.019 | | 2.29 | | 0.07 | 0.06 | 0.55 | Comparative Example |
| 36 | 36 | 0.032 | 0.10 | 2.10 | 0.007 | 0.001 | 0.010 | 0.008 | 0.0034 | 0.0015 | 0.0017 | 0.0032 | 0.0018 | | | | 1.96 | | | | 0.69 | Comparative Example |
| 37 | 37 | 0.049 | 0.07 | 1.73 | 0.017 | 0.004 | 0.009 | 0.002 | 0.0039 | 0.0012 | 0.0009 | 0.0021 | 0.0014 | 0.011 | | | 1.91 | | | | 0.61 | Comparative Example |
| 38 | 38 | 0.036 | 0.14 | 1.58 | 0.009 | 0.011 | 0.010 | 0.009 | 0.0030 | 0.0012 | 0.0008 | 0.0020 | 0.0018 | 0.009 | | 0.20 | 2.21 | | | | 0.59 | Comparative Example |
| 39 | 39 | 0.083 | 0.10 | 1.78 | 0.005 | 0.001 | 0.011 | 0.006 | 0.0037 | 0.0016 | 0.0015 | 0.0031 | 0.0017 | 0.024 | | | 1.94 | | | | 0.66 | Comparative Example |
| 40 | 40 | 0.084 | 0.09 | 1.69 | 0.008 | 0.006 | 0.009 | 0.004 | 0.0036 | 0.0010 | 0.0009 | 0.0019 | 0.0016 | 0.010 | | | 1.80 | | | | 0.64 | Comparative Example |
| 41 | 41 | 0.074 | 0.10 | 1.72 | 0.004 | 0.002 | 0.016 | 0.004 | 0.0031 | 0.0010 | 0.0010 | 0.0020 | 0.0016 | | 0.033 | 0.13 | 1.80 | | | | 0.62 | Comparative Example |
| 42 | 42 | 0.041 | 0.16 | 1.63 | 0.005 | 0.003 | 0.009 | 0.017 | 0.0039 | 0.0009 | 0.0008 | 0.0017 | 0.0019 | 0.019 | 0.026 | 0.12 | 1.96 | | | | 0.59 | Comparative Example |
| 43 | 43 | 0.082 | 0.10 | 1.79 | 0.006 | 0.002 | 0.010 | 0.008 | 0.0064 | 0.0012 | 0.0010 | 0.0022 | 0.0018 | 0.017 | 0.025 | | 2.21 | | | | 0.68 | Comparative Example |
| 44 | 44 | 0.081 | 0.09 | 1.78 | 0.004 | 0.006 | 0.009 | 0.006 | 0.0034 | 0.0016 | 0.0013 | 0.0029 | 0.0004 | 0.019 | | | 2.23 | | | | 0.67 | Comparative Example |
| 45 | 45 | 0.036 | 0.12 | 1.82 | 0.007 | 0.005 | 0.010 | 0.002 | 0.0039 | 0.0012 | 0.0010 | 0.0022 | 0.0020 | 0.002 | 0.030 | | 1.99 | | | | 0.63 | Comparative Example |
| 46 | 46 | 0.055 | 0.05 | 1.81 | 0.005 | 0.002 | 0.010 | 0.009 | 0.0036 | 0.0002 | 0.0020 | 0.0022 | 0.0016 | | | | 2.23 | | | | 0.61 | Comparative Example |
| 47 | 47 | 0.054 | 0.09 | 1.80 | 0.006 | 0.002 | 0.012 | 0.007 | 0.0038 | 0.0019 | 0.0002 | 0.0021 | 0.0017 | | | | 2.24 | | | | 0.61 | Comparative Example |
| 48 | 48 | 0.053 | 0.09 | 1.82 | 0.005 | 0.004 | 0.010 | 0.006 | 0.0034 | 0.0029 | 0.0008 | 0.0037 | 0.0014 | | | | 2.24 | | | | 0.61 | Comparative Example |
| 49 | 49 | 0.055 | 0.12 | 1.81 | 0.006 | 0.003 | 0.011 | 0.008 | 0.0033 | 0.0008 | 0.0028 | 0.0036 | 0.0018 | | | | 2.26 | | | | 0.61 | Comparative Example |
| 50 | 50 | 0.056 | 0.11 | 1.79 | 0.005 | 0.002 | 0.010 | 0.006 | 0.0033 | 0.0023 | 0.0020 | 0.0043 | 0.0017 | | | | 2.27 | | | | 0.61 | Comparative Example |
| 51 | 51 | 0.022 | 0.12 | 1.44 | 0.005 | 0.004 | 0.010 | 0.003 | 0.0034 | 0.0018 | 0.0014 | 0.0032 | 0.0017 | | 0.021 | | 1.89 | | | | 0.51 | Comparative Example |
| 52 | 52 | 0.031 | 0.05 | 1.98 | 0.006 | 0.003 | 0.008 | 0.005 | 0.0033 | 0.0019 | 0.0015 | 0.0034 | 0.0018 | | | | 2.01 | | | | 0.67 | Comparative Example |
| 53 | 53 | 0.098 | 0.05 | 1.77 | 0.005 | 0.004 | 0.011 | 0.005 | 0.0036 | 0.0016 | 0.0014 | 0.0030 | 0.0015 | | | 0.11 | 1.81 | | | | 0.67 | Comparative Example |
| 54 | 6 | 0.037 | 0.25 | 1.80 | 0.007 | 0.003 | 0.010 | 0.011 | 0.0031 | 0.0013 | 0.0009 | 0.0022 | 0.0017 | | | 0.22 | 0.89 | | | | 0.56 | Comparative Example |
| 55 | 22 | 0.056 | 0.13 | 1.62 | 0.006 | 0.009 | 0.010 | 0.008 | 0.0041 | 0.0023 | 0.0005 | 0.0028 | 0.0015 | 0.004 | 0.020 | | 2.40 | | | 0.49 | 0.72 | Comparative Example |
| 56 | 24 | 0.057 | 0.15 | 1.58 | 0.008 | 0.002 | 0.010 | 0.009 | 0.0041 | 0.0011 | 0.0009 | 0.0020 | 0.0009 | 0.010 | | 0.21 | 1.29 | | | | 0.55 | Comparative Example |
| 57 | 30 | 0.097 | 0.06 | 1.31 | 0.006 | 0.003 | 0.010 | 0.004 | 0.0043 | 0.0015 | 0.0013 | 0.0028 | 0.0016 | | | | 2.29 | | 0.42 | 0.44 | 0.75 | Comparative Example |

Table 7

| Joint No. | Steel material No. | Manufacturing conditions | | | | Properties of base metal | | | | Ductility of welded joint δc | | | | | Remarks |
|---|---|---|---|---|---|---|---|---|---|---|---|---|---|---|---|
| | | Cooling rate for cast piece (°C/min) | Heating temperature for steel piece (°C) | Thermomechanical treatment | Plate thickness (mm) | Yield strength (MPa) | Tensile strength (MPa) | Oxide containing Mg and having equivalent circle diameter of 0.05-0.5 μm (pieces/mm$^2$) | Total number of oxide having equivalent circle diameter of 1.0 μm or more (pieces/mm$^2$) | [HAZ] minimum value (mm) | [WM] minimum value (mm) | [BM] minimum value (mm) | $\delta_{HAZ}/\delta_{WM}$ | $\delta_{BM}/\delta_{WM}$ | |
| 1 * | 1 * | 11 | 1050 | ACC | 50 | 377 | 491 | $1.4 \times 10^4$ | 18 | 0.37 | 1.00 | 1.00 | 0.37 | 1.00 | |
| 2 | 2 | 12 | 1050 | ACC | 60 | 403 | 511 | $7.7 \times 10^3$ | 17 | 0.33 | 1.00 | 1.00 | 0.33 | 1.00 | |
| 3 | 3 | 9 | 1100 | ACC | 65 | 379 | 484 | $1.0 \times 10^4$ | 12 | 0.35 | 0.99 | 0.99 | 0.35 | 1.00 | |
| 4 | 4 | 16 | 1050 | ACC | 60 | 384 | 502 | $1.2 \times 10^4$ | 18 | 0.31 | 1.00 | 1.00 | 0.31 | 1.00 | |
| 5 | 5 | 12 | 1050 | ACC | 60 | 400 | 505 | $1.6 \times 10^4$ | 18 | 0.32 | 1.00 | 1.00 | 0.32 | 1.00 | |
| 6 | 6 | 11 | 1050 | ACC | 80 | 379 | 492 | $6.6 \times 10^3$ | 18 | 0.44 | 0.96 | 0.96 | 0.46 | 1.00 | |
| 7 | 7 | 13 | 1100 | ACC | 50 | 386 | 505 | $7.1 \times 10^4$ | 19 | 0.34 | 1.00 | 1.00 | 0.34 | 1.00 | |
| 8 | 8 | 14 | 1050 | ACC | 60 | 398 | 500 | $5.0 \times 10^4$ | 14 | 0.42 | 1.00 | 0.96 | 0.42 | 0.96 | |
| 9 | 9 | 16 | 1100 | CR | 55 | 376 | 487 | $1.2 \times 10^4$ | 13 | 0.30 | 1.00 | 1.00 | 0.30 | 1.00 | |
| 10 | 10 | 10 | 1100 | ACC | 60 | 396 | 502 | $1.3 \times 10^4$ | 20 | 0.32 | 1.00 | 0.97 | 0.32 | 0.97 | |
| 11 | 11 | 12 | 950 | ACC | 65 | 377 | 491 | $1.0 \times 10^4$ | 12 | 0.40 | 1.00 | 0.96 | 0.40 | 0.96 | |
| 12 | 12 | 9 | 1050 | ACC | 65 | 386 | 505 | $1.2 \times 10^4$ | 18 | 0.31 | 1.00 | 1.00 | 0.31 | 1.00 | |
| 13 | 13 | 14 | 1050 | CR | 90 | 400 | 503 | $2.1 \times 10^4$ | 16 | 0.30 | 1.00 | 0.97 | 0.30 | 0.97 | |
| 14 | 14 | 11 | 1100 | ACC | 80 | 387 | 496 | $1.4 \times 10^4$ | 18 | 0.37 | 0.99 | 1.00 | 0.37 | 1.01 | |
| 15 | 15 | 16 | 1050 | ACC | 75 | 401 | 507 | $1.4 \times 10^4$ | 13 | 0.32 | 1.00 | 1.00 | 0.32 | 1.00 | |
| 16 | 16 | 12 | 1050 | ACC | 55 | 382 | 486 | $2.6 \times 10^4$ | 19 | 0.36 | 1.00 | 1.00 | 0.36 | 1.00 | |
| 17 | 17 | 9 | 1000 | DQT | 100 | 397 | 499 | $8.4 \times 10^3$ | 13 | 0.43 | 0.96 | 1.00 | 0.45 | 1.04 | |
| 18 | 18 | 10 | 1050 | ACC | 65 | 379 | 492 | $7.1 \times 10^4$ | 20 | 0.31 | 1.00 | 1.00 | 0.31 | 1.00 | |
| 19 | 19 | 9 | 1050 | CR | 50 | 383 | 498 | $5.0 \times 10^4$ | 16 | 0.33 | 1.00 | 1.00 | 0.33 | 1.00 | |
| 20 | 20 | 13 | 1100 | DQT | 130 | 401 | 493 | $1.2 \times 10^4$ | 13 | 0.30 | 1.00 | 1.00 | 0.30 | 1.00 | |
| 21 | 21 | 12 | 1050 | ACC | 60 | 375 | 501 | $1.3 \times 10^4$ | 17 | 0.30 | 1.00 | 1.00 | 0.30 | 1.00 | |
| 22 | 22 | 9 | 1050 | ACC | 70 | 386 | 502 | $9.1 \times 10^3$ | 14 | 0.39 | 1.00 | 1.00 | 0.39 | 1.00 | |
| 23 | 23 | 15 | 1000 | ACC | 90 | 402 | 504 | $5.0 \times 10^4$ | 13 | 0.45 | 1.00 | 1.00 | 0.45 | 1.00 | |
| 24 | 24 | 10 | 1050 | DQT | 120 | 388 | 504 | $1.2 \times 10^4$ | 15 | 0.37 | 1.00 | 1.00 | 0.37 | 1.00 | |
| 25 | 25 | 9 | 950 | ACC | 50 | 401 | 502 | $1.3 \times 10^4$ | 20 | 0.40 | 1.00 | 0.96 | 0.40 | 0.96 | |
| 26 | 26 | 16 | 1100 | ACC | 80 | 376 | 488 | $9.1 \times 10^3$ | 16 | 0.45 | 1.00 | 1.00 | 0.45 | 1.00 | |
| 27 | 27 | 11 | 1150 | ACC | 100 | 379 | 491 | $2.0 \times 10^4$ | 18 | 0.34 | 1.00 | 0.97 | 0.34 | 0.97 | |
| 28 | 28 | 12 | 1100 | ACC | 75 | 384 | 500 | $5.0 \times 10^4$ | 17 | 0.38 | 0.96 | 1.00 | 0.40 | 1.04 | |
| 29 | 29 | 16 | 1150 | ACC | 80 | 398 | 487 | $1.2 \times 10^4$ | 13 | 0.32 | 1.00 | 1.00 | 0.32 | 1.00 | |
| 30 * | 30 * | 9 | 1100 | DQT | 150 | 376 | 498 | $1.3 \times 10^4$ | 18 | 0.30 | 0.97 | 1.00 | 0.31 | 1.03 | |
| 31 | 31 | 12 | 1100 | ACC | 60 | 379 | 474 | $1.1 \times 10^4$ | 15 | 0.35 | 1.00 | 1.00 | 0.35 | 1.00 | |

Example according to present invention

* not according to the scope of the invention

EP 2 594 657 B1

Table 8

EP 2 594 657 B1

| Joint No. | Steel material No. | Manufacturing conditions | | | | Properties of base metal | | | | Ductility of welded joint δc | | | | | Remarks |
|---|---|---|---|---|---|---|---|---|---|---|---|---|---|---|---|
| | | Cooling rate for cast piece (°C/min) | Heating temperature for steel piece (°C) | Thermomechanical treatment | Plate thickness (mm) | Yield strength (MPa) | Tensile strength (MPa) | Oxide containing Mg and having equivalent circle diameter of 0.05-0.5 μm (pieces/mm²) | Total number of oxide having equivalent circle diameter of 1.0 μm or more (pieces/mm²) | [HAZ] minimum value (mm) | [WM] minimum value (mm) | [BM] minimum value (mm) | $\delta_{HAZ}/\delta_{WM}$ | $\delta_{BM}/\delta_{WM}$ | |
| 32 | 32 | 9 | 1050 | CR | 50 | 363 | 471 | $7.7\times10^3$ | 11 | 0.12 | 1.00 | 0.95 | 0.12 | 0.95 | Comparative Example |
| 33 | 33 | 11 | 1100 | DQT | 120 | 402 | 504 | $8.6\times10^3$ | 9 | 0.22 | 1.00 | 1.00 | 0.22 | 1.00 | |
| 34 | 34 | 14 | 1150 | ACC | 60 | 398 | 500 | $2.4\times10^3$ | 14 | 0.02 | 0.96 | 1.00 | 0.02 | 1.04 | |
| 35 | 35 | 16 | 1100 | ACC | 60 | 323 | 451 | $5.7\times10^4$ | 13 | 0.65 | 0.12 | 1.00 | 5.42 | 8.33 | |
| 36 | 36 | 10 | 1050 | ACC | 80 | 428 | 533 | $7.1\times10^3$ | 18 | 0.08 | 0.96 | 0.96 | 0.08 | 1.00 | |
| 37 | 37 | 13 | 1100 | CR | 50 | 385 | 504 | $9.4\times10^3$ | 15 | 0.02 | 0.95 | 0.94 | 0.02 | 0.99 | |
| 38 | 38 | 9 | 1100 | ACC | 55 | 397 | 499 | $1.3\times10^4$ | 19 | 0.02 | 0.93 | 0.96 | 0.02 | 1.03 | |
| 39 | 39 | 10 | 1150 | ACC | 80 | 376 | 501 | $7.7\times10^3$ | 14 | 0.06 | 0.96 | 1.00 | 0.06 | 1.04 | |
| 40 | 40 | 12 | 1100 | ACC | 90 | 381 | 503 | $8.6\times10^3$ | 17 | 0.03 | 1.00 | 1.00 | 0.03 | 1.00 | |
| 41 | 41 | 16 | 1100 | CR | 50 | 402 | 501 | $2.4\times10^3$ | 13 | 0.04 | 1.00 | 0.96 | 0.04 | 0.96 | |
| 42 | 42 | 11 | 1100 | ACC | 55 | 375 | 491 | $8.7\times10^2$ | 12 | 0.04 | 1.00 | 0.95 | 0.04 | 0.95 | |
| 43 | 43 | 9 | 1150 | ACC | 100 | 397 | 491 | $7.1\times10^3$ | 16 | 0.03 | 1.00 | 0.96 | 0.03 | 0.96 | |
| 44 | 44 | 10 | 1100 | ACC | 60 | 401 | 502 | $1.0\times10^2$ | 6 | 0.12 | 1.00 | 1.00 | 0.12 | 1.00 | |
| 45 | 45 | 12 | 1100 | ACC | 55 | 376 | 503 | $1.9\times10^6$ | 48 | 0.05 | 1.00 | 0.94 | 0.05 | 0.94 | |
| 46 | 46 | 12 | 1050 | ACC | 50 | 383 | 501 | $5.6\times10^2$ | 17 | 0.04 | 0.95 | 1.00 | 0.04 | 1.05 | |
| 47 | 47 | 10 | 1050 | ACC | 50 | 382 | 505 | $8.6\times10^3$ | 30 | 0.02 | 0.95 | 1.00 | 0.02 | 1.05 | |
| 48 | 48 | 10 | 1050 | ACC | 50 | 384 | 502 | $2.4\times10^3$ | 23 | 0.25 | 0.95 | 1.00 | 0.26 | 1.05 | |
| 49 | 49 | 12 | 1050 | ACC | 50 | 387 | 504 | $8.3\times10^2$ | 17 | 0.24 | 0.95 | 1.00 | 0.25 | 1.05 | |
| 50 | 50 | 11 | 1050 | ACC | 50 | 385 | 502 | $9.4\times10^3$ | 32 | 0.23 | 0.95 | 0.96 | 0.24 | 1.01 | |
| 51 | 51 | 9 | 1050 | ACC | 50 | 324 | 449 | $1.3\times10^4$ | 14 | 0.31 | 1.00 | 1.00 | 0.31 | 1.00 | |
| 52 | 52 | 11 | 1100 | ACC | 65 | 380 | 489 | $7.7\times10^3$ | 18 | 0.10 | 0.99 | 0.99 | 0.10 | 1.00 | |
| 53 | 53 | 9 | 1150 | ACC | 80 | 397 | 491 | $8.6\times10^3$ | 18 | 0.08 | 1.00 | 1.00 | 0.08 | 1.00 | |
| 54 | 6 | 11 | 1050 | ACC | 80 | 379 | 492 | $2.4\times10^3$ | 18 | 0.02 | 0.10 | 1.00 | 0.20 | 10.00 | |
| 55 | 22 | 9 | 1050 | ACC | 70 | 386 | 502 | $2.4\times10^3$ | 14 | 0.03 | 0.95 | 1.00 | 0.03 | 1.05 | |
| 56 | 24 | 10 | 1050 | DQT | 120 | 388 | 504 | $8.6\times10^3$ | 15 | 0.02 | 0.08 | 1.00 | 0.25 | 12.50 | |
| 57 | 30 | 9 | 1100 | DQT | 150 | 376 | 498 | $2.4\times10^3$ | 18 | 0.01 | 0.95 | 1.00 | 0.01 | 1.05 | |

**Claims**

1. An electron-beam welded joint having a welded metal and manufactured by applying an electron-beam welding to a steel material, the steel material having a composition consisting of, by mass %:

   C: 0.02% to 0.10%;
   Si: 0.03% to 0.30%;
   Mn: 1.8% to 2.5%;
   Ti: 0.005% to 0.015%;
   N: 0.0020% to 0.0060%;
   O: 0.0010% to 0.0035%;
   Mg: 0.0003% to 0.0027%;
   Ca: 0.0003% to 0.0027%;
   Nb: 0% to 0.020%;
   V: 0% to 0.030%;
   Cr: 0% to 0.50%;
   Mo: 0% to 0.50%;
   Cu: 0% to 0.25%;
   Ni: 0% to 0.50%;
   B: 0% to 0.0030%;
   Al: limited to 0.015% or less;
   P: limited to 0.015% or less; and
   S: limited to 0.010% or less,

   with a balance consisting of iron and inevitable impurities, wherein
   an amount of Mg and Ca contained in the composition of the steel material satisfies $0.0006\% \leq Mg + Ca \leq 0.0040\%$ in mass %,
   a total amount in mass% of Cr, Mo, Cu, and Ni in the composition of the steel is 0.70 or less, and
   an index value CeEBB, which is the index of hardenability after electron-beam welding of steel material, obtained by substituting the composition of the steel material into the following Formula 1 is 0.42% or more and 0.65% or less,
   a C/CeEBB, which is a ratio of the amount of C in the steel material by mass% relative to the index value CeEBB, falls in the range of 0.02 to 0.15,
   number of oxides having an equivalent circle diameter of 1.0 $\mu$m or more is 20 pieces/mm$^2$ or less at a thickness center portion in cross-section along a thickness direction of the steel material,
   number of oxides containing Mg of 7% or more and having an equivalent circle diameter of 0.05 $\mu$m or more and less than 0.5 $\mu$m is $1 \times 10^3$ to $1 \times 10^5$ pieces/mm$^2$ at the thickness center portion, the number of the oxides containing Mg of 7% or more and having an equivalent circle diameter of 0.05 $\mu$m or more and less than 0.5 $\mu$m being measured by using FE-TEM at a magnification of 10000-fold to 1000000-fold,
   the welded metal has a composition including, by mass %:

   C: 0.02% to 0.10%;
   Si: 0.03% to 0.30%;
   Mn: 1.2% to 2.4%;
   Ni: 1.0% to 2.3%;
   Ti: 0.005% to 0.015%;
   N: 0.0020% to 0.0060%;
   O: 0.0004% to 0.0020%;
   Mg: 0.0003% to 0.0027%;
   Ca: 0.0003% to 0.0027%;
   Nb: 0% to 0.020%;
   V: 0% to 0.030%;
   Cr: 0% to 0.50%;
   Mo: 0% to 0.50%;
   Cu: 0% to 0.25%;
   B: 0% to 0.0030%;
   Al: limited to 0.015% or less;
   P: limited to 0.015% or less; and
   S: limited to 0.010% or less,

with a balance consisting of iron and inevitable impurities, wherein
an amount of Mg and Ca contained in the composition of the welded metal satisfies $0.0006\% \leq Mg + Ca \leq 0.0040\%$ in mass %, and
an index value of CeEBW, which is the index of hardenability after electron-beam welding of welded metal, obtained by substituting the composition of the welded metal into the following Formula 2 is 0.56% or more and 0.73% or less,

$$CeEBB = C + (1/4)\,Mn + (1/15)\,Cu + (1/15)\,Ni + (1/5)\,Cr + (1/5)\,Mo + (1/5)\,V$$
$$(Formula\ 1)$$

where C, Mn, Cu, Ni, Cr, Mo, and V represent mass % of elements contained in the composition of the steel material.

$$CeEBW = C + (1/4)\,Mn + (1/15)\,Cu + (1/15)\,Ni + (1/5)\,Cr + (1/5)\,Mo + (1/5)\,V$$
$$(Formula\ 2)$$

where C, Mn, Cu, Ni, Cr, Mo, and V represent mass % of elements contained in the composition of the welded metal.

2. The electron-beam welded joint according to Claim 1, wherein the steel material has a thickness in the range of 45 mm to 150 mm.

3. The electron-beam welded joint according to Claim 1, satisfying

$$0.8 \leq \delta_{BM}/\delta_{WM} \leq 1.25,$$

and

$$0.3 \leq \delta_{HAZ}/\delta_{WM} \leq 1.1,$$

where $\delta_{WM}$, $\delta_{HAZ}$ and $\delta_{BM}$ are fracture toughness values, and the $\delta_{WM}$ is a crack tip opening displacement value CTOD of the welded metal, measured at a temperature of 0°C,
the $\delta_{HAZ}$ is a CTOD value of a weld heat-affected zone measured at a temperature of 0°C, and
the $\delta_{BM}$ is a CTOD value of the steel material measured at a temperature of 0°C.

4. A steel material for electron-beam welding having a composition consisting of, by mass %:

   C: 0.02% to 0.10%;
   Si: 0.03% to 0.30%;
   Mn: 1.8% to 2.5%;
   Ti: 0.005% to 0.015%;
   N: 0.0020% to 0.0060%;
   O: 0.0010% to 0.0035%;
   Mg: 0.0003% to 0.0027%;
   Ca: 0.0003% to 0.0027%;
   Nb: 0% to 0.020%;
   V: 0% to 0.030%;
   Cr: 0% to 0.50%;
   Mo: 0% to 0.50%;
   Cu: 0% to 0.25%;
   Ni: 0% to 0.50%;
   B: 0% to 0.0030%;
   Al: limited to 0.015% or less;
   P: limited to 0.015% or less; and

S: limited to 0.010% or less,

with a balance consisting of iron and inevitable impurities, wherein
an amount of Mg and Ca contained in the composition of the steel material satisfies 0.0006% ≤ Mg + Ca ≤ 0.0040% in mass %,
a total amount in mass% of Cr, Mo, Cu, and Ni in the composition of the steel is 0.70 or less,
an index value CeEBB obtained by substituting the composition of the steel material into the following Formula 1 is 0.42% or more and 0.65% or less,
a C/CeEBB, which is a ratio of the amount of C in the steel material by mass% relative to the index value CeEBB, falls in the range of 0.02 to 0.15,
number of oxides having an equivalent circle diameter of 1.0 μm or more is 20 pieces/mm² or less at a thickness center portion in cross-section along a thickness direction of the steel material, and
number of oxides containing Mg of 7% or more and having an equivalent circle diameter of 0.05 μm or more and less than 0.5 μm is $1 \times 10^3$ to $1 \times 10^5$ pieces/mm² at the thickness center portion, the number of the oxides containing Mg of 7% or more and having an equivalent circle diameter of 0.05 μm or more and less than 0.5 μm being measured by using FE-TEM at a magnification of 10000-fold to 1000000-fold.

$$CeEBB = C + (1/4)\,Mn + (1/15)\,Cu + (1/15)\,Ni + (1/5)\,Cr + (1/5)\,Mo + (1/5)\,V$$

$$(Formula\ 1)$$

where C, Mn, Cu, Ni, Cr, Mo, and V represent mass % of elements in the composition of the steel material.

5. The steel material for electron-beam welding according to Claim 4, wherein the steel material has a thickness in the range of 45 mm to 150 mm.


**Patentansprüche**

1. Eine Elektronenstrahl-Schweißverbindung mit einem geschweißten Metall und hergestellt durch Anwenden von Elektronenstrahl-Schweißen auf ein Stahlmaterial, wobei das Stahlmaterial eine Zusammensetzung aufweist, bestehend aus, in Massen-%:

C: 0,02% bis 0,10%;
Si: 0,03% bis 0,30%;
Mn: 1,8% bis 2,5%;
Ti: 0,005% bis 0,015%;
N: 0,0020% bis 0,0060%;
O: 0,0010% bis 0,0035%;
Mg: 0,0003% bis 0,0027%;
Ca: 0,0003% bis 0,0027%;
Nb: 0% bis 0,020%;
V: 0% bis 0.030%;
Cr: 0% bis 0,50%;
Mo: 0% bis 0,50%;
Cu: 0% bis 0,25%;
Ni: 0% bis 0,50%;
B: 0% bis 0,0030%;
Al: begrenzt auf 0,015% oder weniger;
P: begrenzt auf 0,015% oder weniger; und
S: begrenzt auf 0,010% oder weniger,

mit einem Rest bestehend aus Eisen und unvermeidbaren Verunreinigungen, wobei
eine Menge an Mg und Ca, die in der Zusammensetzung des Stahlmaterials enthalten ist, 0.0006% ≤ Mg + Ca < 0,0040% in Massen-% erfüllt,
eine Gesamtmenge, in Massen-%, an Cr, Mo, Cu und Ni in der Zusammensetzung des Stahls 0,70 oder weniger beträgt, und
ein Indexwert CeEBB, welcher der Index der Härtbarkeit nach dem Elektronenstrahl-Schwceißen des Stahlmaterials

ist, erhalten durch Einsetzen der Zusammensetzung des Stahlmaterials in die nachstehende Formel 1, 0,42% oder mehr und 0,65% oder weniger beträgt,

ein C/CeEBB, welches ein Verhältnis der Menge an C in dem Stahlmaterial in Massen-% zu dem Indexwert CeEBB ist, in den Bereich von 0,02 zu 0,15 fällt,

Anzahl an Oxiden mit einem äquivalenten Kreisdurchmesser von 1,0 $\mu$m oder mehr 20 Stück/mm$^2$ oder weniger in einem Dickemittebereich in einem Querschnitt entlang einer Dickerichtung des Stahlmaterials beträgt,

Anzahl an Oxiden, welche 7% oder mehr an Mg enthalten und einen äquivalenten Kreisdurchmesser von 0,05 $\mu$m oder mehr und weniger als 0.5 $\mu$m aufweisen, $1 \times 10^3$ bis $1 \times 10^5$ Stück/mm$^2$ in dem Dickemittebereich beträgt, wobei die Anzahl an Oxiden, welche 7% oder mehr an Mg enthalten und einen äquivalenten Kreisdurchmesser von 0,05 $\mu$m oder mehr und weniger als 0,5 $\mu$m aufweisen, unter Verwendung von FE-TEM bei einer 10000-fachen bis 1000000-fachen Vergrößerung gemessen wird,

wobei das geschweißte Metall eine Zusammensetzung aufweist, in Massen-%, enthaltend:

C: 0.02% bis 0,10%;
Si: 0,03% bis 0,30%;
Mn: 1,2% bis 2,4%;
Ni: 1,0% bis 2,3%;
Ti: 0,005% bis 0,015%;
N: 0,0020% bis 0,0060%;
O: 0,0004% bis 0,0020%;
Mg: 0,0003% bis 0,0027%;
Ca: 0,0003% bis 0,0027%;
Nb: 0% bis 0,020%;
V: 0% bis 0,030%;
Cr: 0% bis 0,50%;
Mo: 0% bis 0,50%;
Cu: 0% bis 0,25%;
B: 0% bis 0.0030%;
Al: begrenzt auf 0,015% oder weniger;
P: begrenzt auf 0,015% oder weniger; und
S: begrenzt auf 0,010% oder weniger,

mit einem Rest bestehend aus Eisen und unvermeidbaren Verunreinigungen, wobei

eine Menge an Mg und Ca, die in der Zusammensetzung des geschweißten Metalls enthalten ist, $0,0006\% \leq Mg + Ca \leq 0,0040\%$ in Massen-% erfüllt, und

ein Indexwert von CeEBW, welcher der Index der Härtbarkeit nach dem Elektronenstrahl-Schweißen des geschweißten Metalls ist, erhalten durch Einsetzen der Zusammensetzung des geschweißten Metalls in die nachstehende Formel 2, 0,56% oder mehr und 0,73% oder weniger beträgt,

$$CeEBB = C + (1/4)\,Mn + (1/15)\,Cu + (1/15)\,Ni + (1/5)\,Cr + (1/5)\,Mo + (1/5)\,V$$

$$(Formel\ 1)$$

wobei C, Mn, Cu, Ni, Cr, Mo und V Massen-% der Elemente, welche in der Zusammensetzung des Stahlmaterials enthalten sind, darstellen.

$$CeEBW = C + (1/4)\,Mn + (1/15)\,Cu + (1/15)\,Ni + (1/5)\,Cr + (1/5)\,Mo + (1/5)\,V$$

$$(Formel\ 2)$$

wobei C, Mn, Cu, Ni, Cr, Mo und V Massen-% der Elemente, welche in der Zusammensetzung des geschweißten Metalls enthalten sind, darstellen.

2. Die Elektronenstrahl-Schweißverbindung gemäß Anspruch 1, wobei das Stahlmaterial eine Dicke im Bereich von 45 mm bis 150 mm aufweist.

3. Die Elektronenstrahl-Schweißverbindung gemäß Anspruch 1, welche

$$0.8 \leq \delta_{BM}/\delta_{WM} \leq 1.25$$

und

$$0.3 \leq \delta_{HAZ}/\delta_{WM} \leq 1.1$$

erfüllt, wobei $\delta_{WM}$, $\delta_{HAZ}$ und $\delta_{BM}$ Bruchzähigkeitswerte sind und $\delta_{WM}$ ein Rissaufweitungswert CTOD des geschweißten Metalls ist, welcher bei einer Temperatur von 0°C gemessen wird,
$\delta_{HAZ}$ ein CTOD Wert der Schweißwärmeeinflusszone ist, welcher bei einer Temperatur von 0°C gemessen wird, und
$\delta_{BM}$ ein CTOD Wert des Stahlmaterials ist, welcher bei einer Temperatur von 0°C gemessen wird.

4. Ein Stahlmaterial zum Elektronenstrahl-Schweißen, welches eine Zusammensetzung aufweist, bestehend aus, in Massen-%:

C: 0,02% bis 0,10%;
Si: 0,03% bis 0,30%;
Mn: 1,8% bis 2,5%;
Ti: 0,005% bis 0.015%;
N: 0,0020% bis 0,0060%;
O: 0,0010% bis 0,0035%;
Mg: 0,0003% bis 0,0027%;
Ca: 0,0003% bis 0,0027%;
Nb: 0% bis 0,020%;
V: 0% bis 0,030%;
Cr: 0% bis 0,50%;
Mo: 0% bis 0,50%;
Cu: 0% bis 0,25%;
Ni: 0% bis 0,50%;
B: 0% bis 0,0030%;
Al: begrenzt auf 0,015% oder weniger;
P: begrenzt auf 0,015% oder weniger; und
S: begrenzt auf 0.010% oder weniger,

mit einem Rest bestehend aus Eisen und unvermeidbaren Verunreinigungen, wobei
eine Menge an Mg und Ca, die in der Zusammensetzung des Stahlmaterials enthalten ist, $0,0006\% \leq$ Mg + Ca $\leq$ 0,0040% in Massen-% erfüllt,
eine Gesamtmenge, in Massen-%, an Cr, Mo, Cu und Ni in der Zusammensetzung des Stahls 0,70 oder weniger beträgt,
ein Indexwert CeEBB, erhalten durch Einsetzen der Zusammensetzung des Stahlmaterials in die nachstehende Formel 1, 0,42% oder weniger und 0,65% oder weniger beträgt,
ein C/CeEBB, welches ein Verhältnis der Menge an C in dem Stahlmaterial in Massen-% zu dem Indexwert CeEBB ist, in den Bereich von 0,02 zu 0,15 fällt,
Anzahl an Oxiden mit einem äquivalenten Kreisdurchmesser von 1,0 $\mu$m oder mehr 20 Stück/mm$^2$ oder weniger in einem Dickemittebereich in einem Querschnitt entlang einer Dickerichtung des Stahlmaterials beträgt, und
Anzahl an Oxiden, welche 7% oder mehr an Mg enthalten und einen äquivalenten Kreisdurchmesser von 0.05 $\mu$m oder mehr und weniger als 0,5 $\mu$m aufweisen, $1 \times 10^3$ bis $1 \times 10^5$ Stück/mm$^2$ in dem Dickemittebereich beträgt, wobei die Anzahl an Oxiden, welche 7% oder mehr an Mg enthalten und einen äquivalenten Kreisdurchmesser von 0,05 $\mu$m oder mehr und weniger als 0,5 $\mu$m aufweisen, unter Verwendung von FE-TEM bei einer 10000-fachen bis 1000000-fachen Vergrößerung gemessen werden,

$$CeEBB = C + (1/4)\,Mn + (1/15)\,Cu + (1/15)\,Ni + (1/5)\,Cr + (1/5)\,Mo + (1/5)\,V$$

$$(Formel\ 1)$$

wobei C, Mn, Cu, Ni, Cr, Mo und V Massen-% der Elemente in der Zusammensetzung des Stahlmaterials darstellen.

**5.** Das Stahlmaterial zum Elektronenstrahl-Schweißen gemäß Anspruch 4, wobei das Stahlmaterial eine Dicke im Bereich von 45 mm bis 150 mm aufweist.

**Revendications**

**1.** Joint soudé par faisceau d'électrons ayant un métal soudé et fabriqué en appliquant un soudage par faisceau d'électrons à un matériau d'acier, le matériau d'acier ayant une composition constituée, en % en masse, de :

C : de 0,02 % à 0,10 % ;
Si : de 0,03 % à 0,30 % ;
Mn : de 1,8 % à 2,5 % ;
Ti : de 0,005 % à 0,015 % ;
N : de 0,0020 % à 0,0060 % ;
O : de 0,0010 % à 0,0035 % ;
Mg : de 0,0003 % à 0,0027 % ;
Ca : de 0,0003 % à 0,0027 % ;
Nb : de 0 % à 0,020 % ;
V : de 0 % à 0,030 % ;
Cr : de 0 % à 0,50 % ;
Mo : de 0 % à 0,50 % ;
Cu : de 0 % à 0,25 % ;
Ni : de 0 % à 0,50 % ;
B : de 0 % à 0,0030 % ;
Al : limité à 0,015 % ou moins ;
P : limité à 0,015 % ou moins ; et
S : limité à 0,010 % ou moins,

le reste étant constitué de fer et d'impuretés inévitables, dans lequel
une quantité de Mg et de Ca contenus dans la composition du matériau d'acier satisfait $0,0006\ \% \leq Mg + Ca \leq 0,0040\ \%$, en % en masse,
une quantité totale, en % en masse, de Cr, Mo, Cu et Ni dans la composition de l'acier est de 0,70 ou moins, et
une valeur d'indice CeEBB, qui est l'indice de capacité de durcissement après le soudage par faisceau d'électrons du matériau d'acier, obtenue en substituant la composition du matériau d'acier dans la Formule 1 suivante est de 0,42 % ou plus et 0,65 % ou moins,
un C/CeEBB, qui est un rapport de la quantité de C dans le matériau d'acier, en % en masse, par rapport à la valeur d'indice CeEBB, tombe dans la plage de 0,02 à 0,15,
un nombre d'oxydes ayant un diamètre de cercle équivalent de 1,0 $\mu$m ou plus est de 20 pièces/mm$^2$ ou moins au niveau d'une partie centre d'épaisseur dans une section transversale le long d'une direction d'épaisseur du matériau d'acier,
un nombre d'oxydes contenant 7 % ou plus de Mg et ayant un diamètre de cercle équivalent de 0,05 $\mu$m ou plus et moins de 0,5 $\mu$m est de $1 \times 10^3$ à $1 \times 10^5$ pièces/mm$^2$ au niveau de la partie centre d'épaisseur, le nombre des oxydes contenant 7 % ou plus de Mg et ayant le diamètre de cercle équivalent de 0,05 $\mu$m ou plus et moins de 0,5 $\mu$m étant mesuré à l'aide d'un FE-TEM selon un grossissement de 10 000 fois à 1 000 000 fois,
le métal soudé a une composition incluant, en % en masse :

C : de 0,02 % à 0,10 % ;
Si : de 0,03 % à 0,30 % ;
Mn : de 1,2 % à 2,4 % ;
Ni : de 1,0 % à 2,3 % ;
Ti : de 0,005 % à 0,015 % ;
N : de 0,0020 % à 0,0060 % ;
O : de 0,0004 % à 0,0020 % ;
Mg : de 0,0003 % à 0,0027 % ;
Ca : de 0,0003 % à 0,0027 % ;
Nb : de 0 % à 0,020 % ;
V : de 0 % à 0,030 % ;
Cr : de 0 % à 0,50 % ;

Mo : de 0 % à 0,50 % ;
Cu : de 0 % à 0,25 % ;
B : de 0 % à 0,0030 % ;
Al : limité à 0,015 % ou moins ;
P : limité à 0,015 % ou moins ; et
S : limité à 0,010 % ou moins,

le reste étant constitué de fer et d'impuretés inévitables, dans lequel
une quantité de Mg et de Ca contenus dans la composition du matériau soudé satisfait 0,0006 % ≤ Mg + Ca ≤ 0,0040 %, en % en masse, et
une valeur d'indice CeEBW, qui est l'indice de capacité de durcissement après le soudage par faisceau d'électrons du métal soudé, obtenue en substituant la composition du métal soudé dans la Formule 2 suivante est de 0,56 % ou plus et 0,73 % ou moins,

$$CeEBB = C + (1/4)Mn + (1/15)Cu + (1/15)Ni + (1/5)Cr + (1/5)Mo + (1/5)V$$

$$(Formule\ 1)$$

où C, Mn, Cu, Ni, Cr, Mo et V représentent le % en masse
d'éléments contenus dans la composition du matériau d'acier,

$$CeEBW = C + (1/4)Mn + (1/15)Cu + (1/15)Ni + (1/5)Cr + (1/5)Mo + (1/5)V$$

$$(Formule\ 2)$$

où C, Mn, Cu, Ni, Cr, Mo et V représentent le % en masse d'éléments contenus dans la composition du métal soudé.

2. Joint soudé par faisceau d'électrons selon la revendication 1, dans lequel le matériau d'acier a une épaisseur dans la plage de 45 mm à 150 mm.

3. Joint soudé par faisceau d'électrons selon la revendication 1, satisfaisant

$$0,8 \leq \delta_{BM} / \delta_{WM} \leq 1,25,$$

et

$$0,3 \leq \delta_{HAZ} / \delta_{WM} \leq 1,1,$$

où $\delta_{WM}$, $\delta_{HAZ}$ et $\delta_{BM}$ sont des valeurs de ténacité à la fracture, et
la $\delta_{WM}$ est une valeur de déplacement d'ouverture d'extrémité de fissure CTOD du métal soudé, mesurée à une température de 0°C,
la $\delta_{HAZ}$ est une valeur CTOD d'une zone affectée par la chaleur à une température de 0 °C,
la $\delta_{BM}$ est une valeur CTOD du matériau d'acier à une température de 0 °C.

4. Matériau d'acier pour soudage par faisceau d'électrons ayant une composition constituée, en % en masse, de :

C : de 0,02 % à 0,10 % ;
Si : de 0,03 % à 0,30 % ;
Mn : de 1,8 % à 2,5 % ;
Ti : de 0,005 % à 0,015 % ;
N : de 0,0020 % à 0,0060 % ;
O : de 0,0010 % à 0,0035 % ;
Mg : de 0,0003 % à 0,0027 % ;

Ca : de 0,0003 % à 0,0027 % ;
Nb : de 0 % à 0,020 % ;
V : de 0 % à 0,030 % ;
Cr : de 0 % à 0,50 % ;
Mo : de 0 % à 0,50 % ;
Cu : de 0 % à 0,25 % ;
Ni : de 0 % à 0,50 % ;
B : de 0 % à 0.0030 % ;
Al : limité à 0,015 % ou moins ;
P : limité à 0,015 % ou moins ; et
S : limité à 0,010 % ou moins,

le reste étant constitué de fer et d'impuretés inévitables, dans lequel
une quantité de Mg et de Ca contenus dans la composition du matériau d'acier satisfait $0,0006\ \% \leq Mg + Ca \leq 0,0040\ \%$, en % en masse,
une quantité totale, en % en masse, de Cr, Mo, Cu et Ni dans la composition de l'acier est de 0,70 ou moins, et
une valeur d'indice CeEBB obtenue en substituant la composition du matériau d'acier dans la Formule 1 suivante est de 0,42 % ou plus et 0,65 % ou moins,
un C/CeEBB, qui est un rapport de la quantité de C dans le matériau d'acier, en % en masse, par rapport à la valeur d'indice CeEBB, tombe dans la plage de 0,02 à 0,15,
un nombre d'oxydes ayant un diamètre de cercle équivalent de 1,0 $\mu$m ou plus est de 20 pièces/mm$^2$ ou moins au niveau d'une partie centre d'épaisseur dans une section transversale le long d'une direction d'épaisseur du matériau d'acier, et
un nombre d'oxydes contenant 7 % ou plus de Mg et ayant un diamètre de cercle equivalent de 0,05 $\mu$m ou plus et moins de 0,5 $\mu$m est de 1 x 10$^3$ à 1 x 10$^5$ pièces/mm$^2$ au niveau de la partie centre d'épaisseur, le nombre des oxydes contenant 7 % ou plus de Mg et ayant le diamètre de cercle équivalent de 0,05 $\mu$m ou plus et moins de 0,5 $\mu$m étant mesuré à l'aide d'un FE-TEM selon un grossissement de 10 000 fois à 1 000 000 fois,

$$CeEBB = C + (1/4)Mn + (1/15)Cu + (1/15)Ni + (1/5)Cr + (1/5)Mo + (1/5)V$$

$$(Formule\ 1)$$

où C, Mn, Cu, Ni, Cr, Mo et V représentent le % en masse d'éléments contenus dans la composition du matériau d'acier.

5. Matériau d'acier pour soudage par faisceau d'électrons selon la revendication 4, dans lequel le matériau d'acier a une épaisseur dans la plage de 45 mm à 150 mm.

FIG. 1

FIG. 2A

FIG. 2B

FIG. 3

HARDNESS OF WELDED METAL RELATIVE TO HARDNESS OF BASE METAL

FIG. 4

## FIG. 5

## FIG. 6

FL NOTCH    WM NOTCH

# FIG. 7

## FIG. 8A

## FIG. 8B

FIG. 9

Y-axis: OXIDE CONTAINING MG AND HAVING EQUIVALENT CIRCLE DIAMETER OF 0.05-0.5 $\mu$m (pieces/mm$^2$)

X-axis: TOTAL AMOUNT OF OXIDE IN STEEL (ppm)

RANGE ACCORDING TO THE PRESENT INVENTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008111406 A
- JP 2007092406 A
- JP 2006322400 A
- JP 2006037397 A
- WO 9916101 A
- JP 2007021532 A
- JP 2008088504 A
- JP 2003293079 A
- JP 2009127104 A
- JP 2005307261 A
- JP 2008214754 A
- JP 05171341 A
- JP 2007046096 A
- JP 2004124168 A
- JP 2004216384 A
- EP 1221493 A
- JP 2000001738 A
- JP 2001089825 A